# EUROPEAN PATENT SPECIFICATION

(11) **EP 3 960 603 B1**
(45) Date of publication and mention of the grant of the patent: **01.11.2023**
(21) Application number: 20795380.3
(22) Date of filing: 17.02.2020
(51) Int. Cl.: B62K 11/00, B62M 7/02, B62J 40/00, F02M 35/16

(54) **STRADDLED VEHICLE**
GRÄTSCHSITZFAHRZEUG
VÉHICULE ENFOURCHÉ

(30) Priority: 24.04.2019 JP 2019083236
(43) Date of publication of application: 02.03.2022
(73) Proprietor: Yamaha Hatsudoki Kabushiki Kaisha, Iwata-shi, Shizuoka 438-8501 (JP)
(72) Inventor: MAKITA, Naoki, Iwata-shi, Shizuoka 438-8501 (JP); SATO, Hayatoshi, Iwata-shi, Shizuoka 438-8501 (JP); KUROIWA, Makoto, Iwata-shi, Shizuoka 438-8501 (JP); TORIGOSHI, Masaki, Iwata-shi, Shizuoka 438-8501 (JP)
(74) Representative: Stöckeler, Ferdinand
(86) International application number: PCT/JP2020/006000
(87) International publication number: WO 2020/217659

(56) References cited:
- EP-A1- 3 456 619
- JP-A- S5 711 117
- JP-A- 2017 160 841
- JP-U- S6 029 722
- JP-U- S6 029 722

## Description

### Technical Field

The present teaching relates to a straddled vehicle, and more particularly to a straddled vehicle with a turbocharger.

### Background Art

Straddled vehicles such as motorcycles are known. Some straddled vehicles include a turbocharger. For example, International Patent Application Publication No. WO 2017/217449 discloses such a straddled vehicle.

The straddled vehicle disclosed in WO 2017/217449 includes a vehicle body frame, an engine unit, a front wheel unit and a rear wheel unit. The engine unit includes an engine main body, an intake passage member, an upstream exhaust passage member, a downstream exhaust passage member, a turbocharger, a bypass exhaust passage member and a catalyst portion.

The intake passageway defines an intake passage through which intake air taken in from the atmosphere flows to the engine. The exhaust passageway defines an exhaust passage through which an exhaust gas from the engine flows. The turbocharger includes a turbine wheel and a compressor wheel. The turbine wheel is positioned in the exhaust passageway. The compressor wheel is positioned in the intake passageway. The compressor wheel is connected to the turbine wheel in such a manner so as to rotate together with the turbine wheel.

Some straddled vehicles with a turbocharger further include a catalyst unit. WO 2017/217449 discloses such a straddled vehicle. In the straddled vehicle disclosed in WO 2017/217449, the catalyst unit is positioned near the turbocharger.

JP S60 29722 U discloses a motorcycle equipped with a supercharger and an air cleaner protruding on at least one side of a fairing.

JP S57 11117 A discloses an air cleaner device for a motorcycle.

### Summary of Invention

### Technical Problem

WO 2017/217449 does not provide any specific teachings about the position of an air cleaner. The present inventors studied where an air cleaner should be positioned in a straddled vehicle with a turbocharger and a catalyst unit. As a result, they noticed that it is necessary to position an air cleaner in a place where the air cleaner is unlikely to intake air that is heated by the heat emitted from the turbocharger and the catalyst unit during idling of the straddled vehicle. Additionally, they noticed that they need to consider the possibility that the position of the air cleaner can cause an increase in the size of the straddled vehicle.

An objective of the present teaching is to provide a straddled vehicle with an air cleaner, a turbocharger and a catalyst unit that is kept from increasing in size of the straddled vehicle while the air cleaner is positioned in a place where the air cleaner is unlikely to intake air that is heated by the heat emitted from the turbocharger and the catalyst unit during idling of the straddled vehicle.

### Solution to the Problem

In order to attain the objective, the present inventors studied about a straddled vehicle including an engine, an intake passageway, an exhaust passageway, a turbocharger, a catalyst unit, an air cleaner, a seat, and a pair of left and right footrests. The intake passageway defines an intake passage through which intake air taken in from the atmosphere flows to the engine. The exhaust passageway defines an exhaust passage through which an exhaust gas from the engine flows. The turbocharger includes a turbine wheel and a compressor wheel. The turbine wheel is positioned in the exhaust passageway. The compressor wheel is positioned in the intake passageway and is connected to the turbine wheel in such a manner so as to rotate together with the turbine wheel. The catalyst unit is positioned in the exhaust passageway and works to clean the exhaust gas. The air cleaner is positioned in the intake passageway and works to clean the intake air. The seat is to be sat on by a rider of the straddled vehicle. The pair of left and right footrests are to support the left and right feet of the rider sitting on the seat.

In such a straddled vehicle, the air cleaner is positioned preferably at the highest place possible so as to take in, the least possible amount of, water or foreign matters. For example, the air cleaner may be positioned higher than the turbocharger and the catalyst unit.

In positioning the air cleaner, it is further necessary to consider the riding position of a rider. A way of positioning the air cleaner without causing a big effect on the riding position of a rider may be, for example, positioning the air cleaner in such a manner that when a rider is sitting on the seat and has his or her feet placed on the pair of footrests, the air cleaner is positioned entirely more frontward than the left leg and right leg of the rider from a view in the leftward-rightward direction of the straddled vehicle.

However, if the air cleaner is placed at a position that is more frontward than the left and right leg of the rider who is sitting on the seat and has his or her feet placed on the pair of footrests from a view in the leftward-rightward direction of the straddled vehicle and is over the turbocharger and the catalyst unit, the air taken in the air cleaner is heated by the heat emitted from the turbocharger and the catalyst unit during idling of the straddled vehicle.

The present inventors studied further after attaining the aforementioned knowledge. Then, the present inventors found the following.

When the air cleaner is positioned entirely to the left or right of the turbocharger or the catalyst unit from a view in the frontward-backward direction of the straddled vehicle, the air cleaner is unlikely to take in air heated by the heat emitted from the turbocharger and the catalyst unit during idling of the straddled vehicle. Additionally, when the air cleaner is positioned in such a manner that at least part of the air cleaner covers or is covered by the left or right leg of the rider who is sitting on the seat and has his or her feet placed on the pair of left and right footrests from a view in the frontward-backward direction of the straddled vehicle, it does not cause an increase in the size of the straddled vehicle.

The present teaching is based on these findings and provides a straddled vehicle according to claim 1.

A straddled vehicle according to an embodiment of the present teaching comprises an engine, an intake passageway, an exhaust passageway, a turbocharger, a seat, a pair of left and right footrests, a catalyst unit, and an air cleaner. The intake passageway defines an intake passage. The intake passage is a passage through which intake air taken in from the atmosphere flows to the engine. The exhaust passageway defines an exhaust passage. The exhaust passage is a passage through which an exhaust gas from the engine flows. The turbocharger includes a turbine wheel and a compressor wheel. The turbine wheel is positioned in the exhaust passageway. The compressor wheel is positioned in the intake passageway. The compressor wheel is connected to the turbine wheel in such a manner so as to rotate together with the turbine wheel. The seat is to be sat on by a rider of the straddled vehicle. The seat is positioned entirely more rearward than the turbocharger from a view in the leftward-rightward direction of the straddled vehicle. The pair of left and right footrests are to support the left and right feet of the rider sitting on the seat. From a view in the leftward-rightward direction of the straddled vehicle, the pair of left and right footrests are positioned entirely more rearward and more downward than the turbocharger. The catalyst unit is placed in the exhaust passageway. The catalyst unit cleans the exhaust gas. The catalyst unit is positioned downstream from the turbine wheel with respect to the direction of exhaust gas flow in the exhaust passageway. From a view in the frontward-backward direction of the straddled vehicle, the catalyst unit is positioned entirely more leftward or rightward than the turbocharger. The air cleaner is placed in the intake passageway. The air cleaner cleans the intake air. The air cleaner includes a part that is positioned more upward than the catalyst unit, a rotation axis of the turbine wheel of the turbocharger and a rotation axis of the compressor wheel of the turbocharger. From a view in the leftward-rightward direction of the straddled vehicle, the air cleaner is positioned in line with at least one of the catalyst unit or the turbocharger in an upward-downward direction of the straddled vehicle. The air cleaner is positioned entirely more leftward or rightward than the catalyst unit and the turbocharger. When a rider is sitting on the seat and has his or her left and right feet placed on the pair of left and right footrests, the air cleaner is positioned entirely more frontward than the left and right leg of the rider. When a rider is sitting on the seat and has his or her left and right feet placed on the pair of left and right footrests, from a view in the frontward-backward direction of the straddled vehicle, at least part of the air cleaner covers or is covered by the left or right leg of the rider. The air cleaner includes an air filter that is configured to clean the intake air, and an air cleaner housing that defines an air filter encasing space in which the air filter is encased. An outlet formed in the air cleaner housing is connected to the turbocharger and faces vehicle-downward. From a view in the leftward-rightward direction of the straddled vehicle, the outlet of the air cleaner is positioned entirely more upward than the rotation axis of the turbine wheel and the compressor wheel of the turbocharger.

In the straddled vehicle above, the air cleaner is positioned entirely more leftward or rightward than the catalyst unit and the turbocharger. Thus, the air cleaner does not exist in the place that the air heated by the heat emitted from the catalyst unit and the turbocharger flows to. In other words, the air cleaner is positioned neither over the catalyst unit nor over the turbocharger. Therefore, even when the straddled vehicle is idling, the air cleaner is unlikely to take in air that is heated by the heat emitted from the turbocharger and the catalyst unit.

In the straddled vehicle above, from a view in the frontward-backward direction of the straddled vehicle, at least part of the air cleaner covers or is covered by the left or right leg of the rider when the rider is sitting on the seat and has his or her left and right feet placed on the pair of left and right footrests. Therefore, this does not cause an increase in the dimension of the straddled vehicle in the leftward-rightward direction of the straddled vehicle.

The straddled vehicle according to the embodiment of the present teaching is, for example, a vehicle with a saddle seat. The straddled vehicle, for example, includes at least one front wheel and at least one rear wheel. The straddled vehicle is not limited to a two-wheeled vehicle, and the straddled vehicle may be a three-wheeled vehicle with a pair of front or rear wheels or a four-wheeled vehicle with a pair of front wheels and a pair of rear wheels. For example, the straddled vehicle may be a scooter, a moped, a snowmobile, a watercraft, an ATV (all terrain vehicle), or the like. The straddled vehicle may be a leaning vehicle, for example. A leaning vehicle means a vehicle having a leaning vehicle body that leans leftward when the vehicle turns left and leans rightward when the vehicle turns right.

In the straddled vehicle according to the embodiment of the present teaching, the engine may include only one combustion chamber or may include a plurality of combustion chambers. Each of the combustion chambers of the engine, for example, may include a main combustion chamber, and a subsidiary combustion chamber connected to the main combustion chamber. An engine with a plurality of combustion chambers is, for example, an engine with a plurality of cylinders. Two adjacent ones of the plurality of cylinders may be connected to each other. When the engine has a plurality of cylinders, a combustion chamber is provided for each of the plurality of cylinders. The arrangement of the plurality of cylinders is not particularly limited. The engine with a plurality of cylinders, for example, may be a V-type engine, an inline engine, or a horizontally opposed engine. The engine may be a forward-inclined engine having forward-inclined cylinder axes or a backward-inclined engine having backward-inclined cylinder axes. The engine has a crankshaft axis that may extend in the leftward-rightward direction of the straddled vehicle or in the frontward-backward direction of the straddled vehicle. The engine may be, for example, a water-cooled engine, an oil-cooled engine, or an air-cooled engine. The air-cooled engine may be a naturally air-cooled engine or a forcedly air-cooled engine. The engine may be, for example, a reciprocating engine or a rotary engine.

In the straddled vehicle according to the embodiment of the present teaching, the turbocharger is not particularly limited as long as it includes a turbine wheel and a compressor wheel. The turbine wheel is placed in the exhaust passageway, and there are no other limitations to the turbine wheel. The compressor wheel is placed in the intake passageway and is connected to the turbine wheel in such a manner so as to rotate together with the turbine wheel, and there are no other limitations to the compressor wheel.

In the straddled vehicle according to the embodiment of the present teaching, the intake passageway defines an intake passage through which intake air taken in from the atmosphere flows to the engine, and there are no other limitations to the intake passageway. The intake passage is a space in which the intake air flows. The intake passageway is a structure including walls and others that define the space in which the intake air flows. The intake passageway, for example, includes a part of the engine, and a pipe connected to the part of the engine. Thus, at least part of the intake passageway may be constructed by a member connected to the engine. Specifically, the intake passageway may include an outer intake passageway that is connected to the engine and defines an outer intake passage that is a part of the intake passage through which the intake air taken in from the atmosphere flows to the engine. Further, at least part of the intake passageway may be constructed by the engine. When the engine includes a plurality of combustion chambers, the intake passage may include a plurality of branch intake passages that are connected to the plurality of combustion chambers on a one-to-one basis. The plurality of branch intake passages may be joined together somewhere in the intake passage.

In the straddled vehicle according to the embodiment of the present teaching, the exhaust passageway defines an exhaust passage through which an exhaust gas from the engine flows, and there are no other limitations to the exhaust passageway. The exhaust passage is a space in which the exhaust gas flows. The exhaust passageway is a structure including walls and others that define the space in which the exhaust gas flows. The exhaust passageway, for example, includes a part of the engine, and a pipe connected to the part of the engine. Thus, at least part of the exhaust passageway may be constructed by a member connected to the engine. Specifically, the exhaust passageway may include an outer exhaust passageway that is connected to the engine and defines an outer exhaust passage that is a part of the exhaust passage through which the exhaust gas from the engine flows. Further, at least part of the exhaust passageway may be constructed by the engine. When the engine includes a plurality of combustion chambers, the exhaust passage may include a plurality of branch exhaust passages that are connected to the plurality of combustion chambers on a one-to-one basis. The plurality of branch exhaust passages may be joined together somewhere in the exhaust passage.

In the straddled vehicle according to the embodiment of the present teaching, the seat is to be sat on by a rider of the straddled vehicle, and there are no other limitations to the function of the seat. From a view in the leftward-rightward direction of the straddled vehicle, the seat is positioned entirely more rearward than the turbocharger, and there are no other limitations to the position of the seat.

In the straddled vehicle according to the embodiment of the present teaching, the pair of left and right footrests is to support the left and right feet of the rider sitting on the seat, and there are no other limitations to the function of the pair of left and right footrests. The pair of left and right footrests is positioned entirely more rearward and more downward than the turbocharger, and there are no other limitations to the position of the pair of left and right footrests.

In the straddled vehicle according to the embodiment of the present teaching, the catalyst unit is not particularly limited as long as it is placed in the exhaust passageway and cleans the exhaust gas. The catalyst unit, for example, has a porous structure. A porous structure is a structure in which there are a plurality of through holes penetrated in the direction of exhaust gas flow. The catalyst unit, for example, is a three-way catalytic converter. The three-way catalytic converter removes hydrocarbons (HC), carbon monoxide (CO) and nitrogen oxides (NOx) by oxidation or reduction. The three-way catalytic converter is a kind of systems that performs redox catalysis. The catalyst unit, for example, includes a base and a catalyst. The base may be, for example, made of metal or ceramics. The catalyst, for example, includes a noble metal. The noble metal included in the catalyst works to clean the exhaust gas, and there are no other limitations to the noble metal. The noble metal is, for example, platinum, palladium, rhodium or the like. The catalyst unit is positioned downstream from the turbine wheel with respect to the direction of exhaust gas flow in the exhaust passageway, and there are no other limitations to the position of the catalyst unit with respect to the turbine wheel. The catalyst unit is positioned entirely more leftward or rightward than the turbocharger, and there are no other limitations to the position of the catalyst unit with respect to the turbocharger.

In the straddled vehicle according to the embodiment of the present teaching, the air cleaner is not particularly limited as long as it meets the following. The air cleaner is placed in the intake passageway and cleans the intake air. The air cleaner includes a part that is positioned more upward than the catalyst unit, the rotation axis of the turbine wheel of the turbocharger and the rotation axis of the compressor wheel of the turbocharger. The air cleaner is positioned entirely more leftward or rightward than the catalyst unit and the turbocharger. From a view in the leftward-rightward direction of the straddled vehicle, the air cleaner is positioned in line with at least one of the catalyst unit, or the turbocharger in the upward-downward direction of the straddled vehicle. When a rider is sitting on the seat and has his or her left and right feet placed on the pair of left and right footrests, the air cleaner is positioned entirely more frontward than the left and right leg of the rider. When a rider is sitting on the seat and has his or her left and right feet placed on the pair of left and right footrests, from a view in the frontward-backward direction of the straddled vehicle, at least part of the air cleaner covers or is covered by the left or right leg of the rider.

In the straddled vehicle according to the embodiment of the present teaching, from a view in the leftward-rightward direction of the straddled vehicle, the air cleaner may be positioned in line with at least one of the catalyst unit, the turbine wheel or the compressor wheel in the upward-downward direction of the straddled vehicle. In this case, the air cleaner may be positioned entirely more leftward or rightward than the catalyst unit, the turbine wheel and the compressor wheel.

In the straddled vehicle according to the embodiment of the present teaching, the air cleaner may include: an air filter that cleans the intake air; and an air cleaner housing that defines an air filter encasing space in which the air filter is encased. In this case, the air cleaner housing may be placed in such a manner that: the air cleaner housing includes a part that is positioned more upward than the catalyst unit, the rotation axis of the turbine wheel and the rotation axis of the compressor wheel; from a view in the leftward-rightward direction of the straddled vehicle, the air cleaner housing is positioned in line with at least one of the catalyst unit, the turbine wheel or the compressor wheel in the upward-downward direction of the straddled vehicle; the air cleaner housing is positioned entirely more leftward or rightward than the catalyst unit, the turbine wheel and the compressor wheel; when a rider is sitting on the seat and has his or her feet placed on the pair of left and right footrests, the air cleaner housing is positioned entirely more frontward than the left and right leg of the rider; and when a rider is sitting on the seat and has his or her feet placed on the pair of left and right footrests, from a view in the frontward-backward direction of the straddled vehicle, at least part of the air cleaner housing covers or is covered by the left or right leg of the rider.

In the straddled vehicle according to the embodiment of the present teaching, each of the catalyst unit, the turbine wheel of the turbocharger and the compressor wheel of the turbocharger may include a part that covers or is covered by the engine from a view in the frontward-backward direction of the straddled vehicle.

This arrangement keeps the straddled vehicle from increasing in the dimension in the upward-downward direction of the straddled vehicle.

In the straddled vehicle according to the embodiment of the present teaching, the air cleaner may have a smaller dimension in the leftward-rightward direction of the straddled vehicle than in the upward-downward direction of the straddled vehicle.

This shape of the air cleaner keeps the straddled vehicle from increasing in the dimension in the leftward-rightward direction of the straddled vehicle.

Some embodiments of the present teaching will hereinafter be described in detail with reference to the drawings, and the detailed description of the embodiments will provide a clearer picture of the above-mentioned object and other objects, the features, the aspects and the advantages of the present teaching.

The term "and/or" used herein includes one or a plurality of the associated items in a list and any or all possible combinations of the associated items.

The terms "including", "comprising", or "having", and variations thereof used herein specify the presence of stated features, steps, operations, elements, components, and/or equivalents thereof, and can include one or more of steps, operations, elements, components, and/or their groups.

Unless otherwise defined, all terms (including technical and scientific terms) used herein have the same meanings as commonly understood by one of ordinary skill in the art to which the present teaching pertains.

It should be understood that terms, such as those defined in commonly used dictionaries, should be interpreted as having meanings that are consistent with their meanings in the context of the present disclosure and relevant art and should not be interpreted in an idealized or overly formal sense unless expressly so defined herein.

It should be understood that the description of the present teaching discloses a number of techniques and steps. Each of these has individual benefit, and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

In the description given below, for the purpose of explanation, numerous specific details are set forth in order to provide a complete understanding of the present teaching. It will be apparent, however, that those skilled in the art may practice the present teaching without these specific details. The present disclosure is to be considered as an exemplification of the present teaching and is not intended to limit the present teaching to the specific embodiments illustrated by drawings or descriptions below.

### Effect of Invention

The present teaching allows a straddled vehicle with an air cleaner, a turbocharger and a catalyst unit to be kept from increasing in size while the air cleaner is positioned in a place where the air cleaner is unlikely to take in air that is heated by the heat emitted from the turbocharger and the catalyst unit during idling of the straddled vehicle.

### Brief Description of Drawings

[FIG. 1] FIG. 1 is a diagram including: a front view of an engine contained in a straddled vehicle according to an embodiment of the present teaching; and a front view of the straddled vehicle when a rider is riding the straddled vehicle.
[FIG. 2] FIG. 2 is a left side view of the straddled vehicle according to the embodiment of the present teaching when a rider is riding the straddled vehicle.
[FIG. 3] FIG. 3 is a diagram of the engine, an intake passageway and an exhaust passageway contained in the straddled vehicle according to the embodiment of the present teaching.
[FIG. 4] FIG. 4 is a left side view of an air cleaner contained in the straddled vehicle according to the embodiment of the present teaching.
[FIG. 5] FIG. 5 is a sectional view of the air cleaner along line V-V shown in FIG. 4.
[FIG. 6] FIG. 6 is an enlarged view of a part of FIG. 2.
[FIG. 7] FIG. 7 is a left side view of a straddled vehicle according to Modification 1 of the embodiment of the present teaching when a rider is riding the straddled vehicle.
[FIG. 8] FIG. 8 is a left side view of a straddled vehicle according to Modification 2 of the embodiment of the present teaching when a rider is riding the straddled vehicle.

### Description of Embodiments

A straddled vehicle according to an embodiment of the present teaching will hereinafter be described in detail with reference to the drawings. The embodiment described below is merely an example. The present teaching shall not be understood to be limited to the embodiment below.

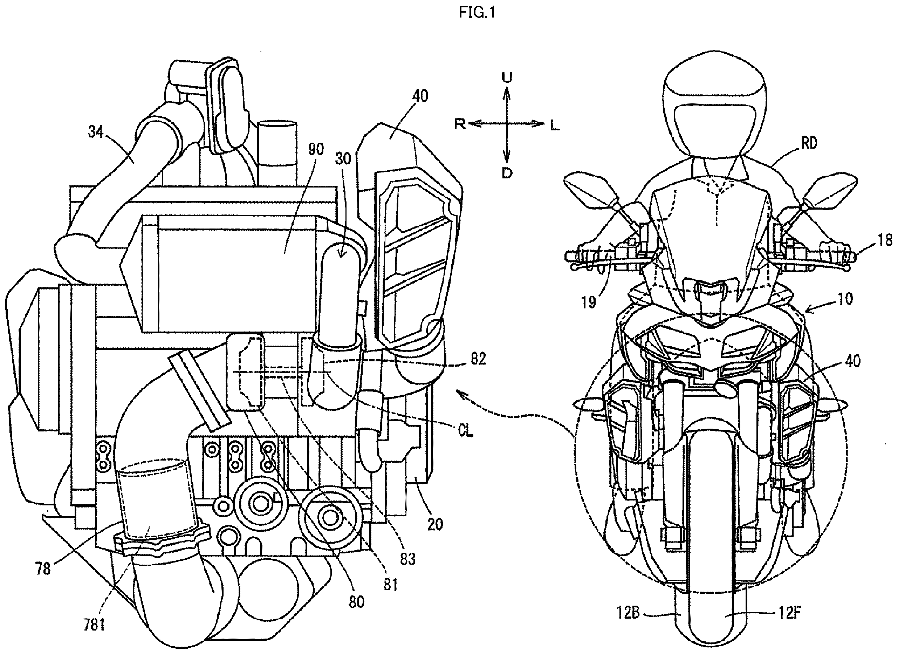

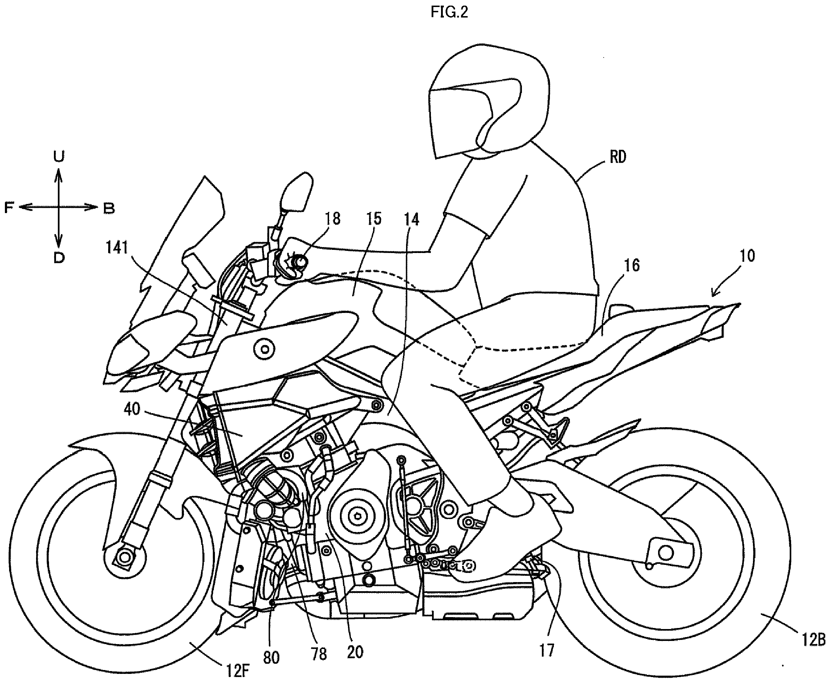

With reference to FIGS. 1 and 2, a straddled vehicle 10 according to an embodiment of the present teaching will hereinafter be described. FIG. 1 shows a front view of an engine 20 contained in the straddled vehicle 10, and a front view of the straddled vehicle 10 when a rider RD is riding the straddled vehicle 10. FIG. 2 is a left side view of the straddled vehicle 10 when the rider RD is riding the straddled vehicle 10.

In this specification, directions relative to the straddled vehicle 10 are defined as follows.

Forward, frontward or the front of the straddled vehicle 10 is referred to as vehicle-forward, vehicle-frontward or the front F. Backward, rearward, the back or the rear of the straddled vehicle 10 is referred to as vehicle-backward, vehicle-rearward, the back or the rear B. Leftward or the left of the straddled vehicle 10 is referred to as vehicle-leftward or the left L. Rightward or the right of the straddled vehicle 10 is referred to as vehicle-rightward or the right R. Upward or higher relative to the straddled vehicle 10 is referred to as vehicle-upward or higher U. Downward or lower relative to the straddled vehicle 10 is referred to as vehicle-downward or lower D. The frontward-backward direction of the straddled vehicle 10 is defined as Vehicle-Front-Back Direction FB (vehicle-frontward-backward direction). The leftward-rightward direction of the straddled vehicle 10 is defined as Vehicle-Left-Right Direction LR (vehicle-leftward-rightward direction). The upward-downward direction of the straddled vehicle 10 is defined as Vehicle-Up-Down Direction UD (vehicle-upward-downward direction). These directions (forward or frontward, backward or rearward, leftward, rightward, upward and downward directions) are directions from the perspective of the rider RD sitting on the seat 16 of the straddled vehicle 10.

In this specification, an axis or a member that extends in the frontward-backward direction does not necessarily mean an axis or a member that is parallel to the frontward-backward direction. An axis or a member that extends in the frontward-backward direction may include an axis or a member that is inclined from the frontward-backward direction in the leftward or rightward direction or the upward or downward direction at an angle within ±45 degrees. In a similar way, an axis or a member that extends in the upward-downward direction may include an axis or a member that is inclined from the upward-downward direction in the forward or backward direction or the leftward or rightward direction at an angle within ±45 degrees. An axis or a member that extends in the leftward-rightward direction may include an axis or a member that is inclined from the leftward-rightward direction in the forward or backward direction or the upward or downward direction at an angle within ±45 degrees.

When two arbitrary members described in the present specification are defined as a first member and a second member, respectively, the relationship between these two members are as follows. The first member and the second member are components of the straddled vehicle 10.

In the present specification, a statement that the first member is positioned entirely more frontward than the second member means the following: the entire first member is positioned more frontward than the plane that passes the front end of the second member and is perpendicular to the frontward-backward direction. In this case, the first member and the second member are not necessarily arranged in line in the frontward-backward direction. This definition applies to other directions as well as the frontward-backward direction.

In the present specification, a statement that the first member is positioned more frontward than and in line with the second member means the following: at least part of the first member is positioned within the area of the range of movement of the second member during forward translation of the second member. Accordingly, the first member may be positioned entirely within the area that the second member passes during forward translation of the second member, or the first member may partly protrude from the area that the second member passes during forward translation of the second member. In this case, the first member and the second member are arranged in line in the frontward-backward direction. This definition applies to other directions as well as the frontward-backward direction.

In this specification, a statement that the first member and the second member are arranged in line in the frontward-backward direction means the following: from a view in a direction perpendicular to the frontward-backward direction, the first member and the second member are on an arbitrary line extending in the frontward-backward direction. In the present specification, a statement that the first member and the second member are arranged in line in the frontward-backward direction from a view in the upward-downward direction means the following: from a view in the upward-downward direction, the first member and the second member are on an arbitrary line extending in the frontward-backward direction. In this case, from a view in the leftward-rightward direction, which is different from the upward-downward direction, the first member and the second member are not necessarily on the same arbitrary line extending in the frontward-backward direction. Further, the first member and the second member may be in contact with each other. From a view in a direction perpendicular to the frontward-backward direction, at least part of the first member may cover or be covered by the second member. The first member and the second member may be out of contact with each other. A third member may be positioned between the first member and the second member. Such definitions apply to other directions as well as the frontward-backward direction.

The straddled vehicle 10 is a motorcycle that is a leaning vehicle. The straddled vehicle 10 includes a front wheel 12F, a rear wheel 12R, a vehicle body frame 14, a seat 16, a pair of left and right footrests 17, and a handlebar 18.

The front wheel 12F is supported by the vehicle body frame 14. From a view in Vehicle-Left-Right Direction LR, the front wheel 12F is positioned entirely more frontward than the engine 20. The front wheel 12F is steered by operation of the handlebar 18. Thus, the front wheel 12F is the steerable wheel.

The vehicle body frame 14 supports the engine 20. The vehicle body frame 14 includes a head pipe 141. The head pipe 141 is positioned entirely more frontward than the engine 20. In the head pipe 141, a steering shaft connected to the handlebar 18 is inserted. The head pipe 141 supports the steering shaft in such a manner that the steering shaft is rotatable.

The rear wheel 12B is supported by the vehicle body frame 14. From a view in Vehicle-Left-Right Direction LR, the rear wheel 12B is positioned entirely more rearward than the engine 20. The rear wheel 12B is rotated by the force transmitted from the engine 20. Thus, the rear wheel 12R is the drive wheel.

The seat 16 is supported by the vehicle body frame 14. A rider RD of the straddled vehicle 10 sits on the seat 16. The rider RD takes a seat by straddling the seat 16. The rider RD, for example, drives the straddled vehicle 10 while sitting on the seat 16.

The pair of left and right footrests 17 is supported by the vehicle body frame 14. The rider RD sitting on the seat 16 can have his or her left and right feet placed on the pair of left and right footrests 17. In other words, the left and right footrests 17 are supported by the vehicle body frame 14 at positions such that the rider RD sitting on the seat 16 can have his or her left and right feet placed on the left and right footrests 17. From a view in Vehicle-Left-Right Direction LR, the pair of left and footrests 17 is positioned more downward than and in line with the seat 16. Each of the left and right footrests 17 extends in Vehicle-Left-Right Direction LR.

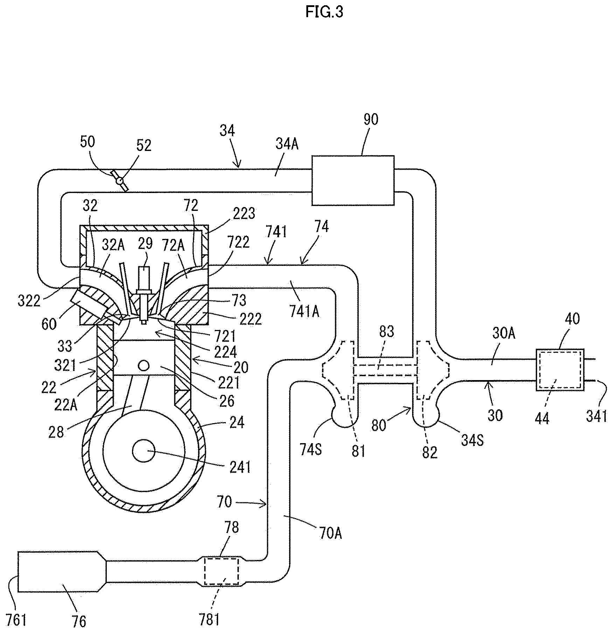

As shown in FIG. 3, the straddled vehicle 10 includes an intake passageway 30, an air cleaner 40, a throttle valve 50, a plurality of injectors 60, an exhaust passageway 70, a turbocharger 80, and an intercooler 90 as well as the engine 20. These will be described below.

The engine 20 is an inline engine in which a plurality of (in this embodiment, three) cylinders 22 are arranged in line in Vehicle-Left-Right Direction LR. Accordingly, the engine 20 has a plurality of (in this embodiment, three) combustion chambers 224. The engine 20 is a four-stroke engine. A four-stroke engine repeats an intake step, a compression step, a combustion step (an expansion step) and an exhaust step. In such a four-stroke engine, the intake step, compression step, combustion step (expansion step) and exhaust step are defined as one cycle.

With reference to FIG. 3, the engine 20 will be described in more detail. FIG. 3 shows one of the plurality of cylinders 22 of the engine 20, the part of the intake passageway 30 connected to the cylinder 22, and the part of the exhaust passageway 70 connected to the cylinder 22.

The engine 20 includes a plurality of (in this embodiment, three) cylinders 22, and a crankcase 24. These will be described below.

Each of the plurality of cylinders 22 is connected to the upper end part of the crankcase 24. The plurality of cylinders 22 are arranged in line in Vehicle-Left-Right Direction LR.

In the present embodiment, the plurality of cylinders 22 are formed integrally. Specifically, the components of the plurality of the cylinders 22 are formed as a one-piece body.

Each of the plurality of cylinders 22 includes a cylinder body 221, a cylinder head 222, and a head cover 223. These will be described below.

The cylinder body 221 is connected to the upper end part of the crankcase 24. The cylinder head 222 is connected to the upper end part of the cylinder body 221. The head cover 223 is connected to the upper end part of the cylinder head 222.

A cylinder hole 22A is formed in the cylinder body 221. A piston 26 is placed in the cylinder hole 22Ain such a manner so as to be freely slideable. The piston 26 is connected to a crankshaft 241 via a connecting rod 28.

A combustion chamber 224 is formed in the cylinder 22. The combustion chamber 224 is defined by the bottom face of the cylinder head 222, the cylinder hole 22A, and the top face of the piston 26. Thus, the cylinder hole 22A defines part of the combustion chamber 224, and the combustion chamber 224 is formed between the bottom face of the cylinder head 222 and the top face of the piston 24.

A spark plug 29 is positioned with its tip inside the combustion chamber 224. The tip of the spark plug 29 generates spark discharge. This spark discharge ignites a gas mixture in the combustion chamber 224. The gas mixture is a mixture of intake air and fuel.

The crankcase 24 encases the crankshaft 241. The crankcase 24 is connected to the lower end parts of the respective cylinders 22.

The intake passageway 30 defines an intake passage 30A through which air taken in from the atmosphere flows to the engine 20. The intake passage 30A is a space through which the intake air passes. The intake passageway 30 is a structure including walls and others that form the space through which the intake air passes.

The intake passageway 30 includes a plurality of (in this embodiment, three) inner intake passageways 32, and an outer intake passageway 34. These will be described below.

Each of the plurality of inner intake passageways 32 is a part of the intake passageway 30. Each of the plurality of inner intake passageways 32 defines an inner intake passage 32Athat is a part of the intake passage 30A. Each of the plurality of inner intake passageways 32 is formed by a part of the corresponding cylinder head 222. In other words, each of the inner intake passages 32A, which is a part of the intake passage 30A, is formed in the cylinder head 222 of the corresponding one of the plurality of cylinders 22. The space formed by each of the plurality of inner intake passageways 32, that is, the space through which the intake air passes is connected to the corresponding one of the plurality of combustion chambers 224. Thus, the inner intake passages 32A, which are parts of the intake passage 30A and are defined by the respective inner intake passageways 32, are connected to the corresponding combustion chambers 224.

A combustion-chamber air inlet 321 is formed on the combustion-chamber-224-defining face of the cylinder head 222 of each of the plurality of cylinders 22. The combustion-chamber air inlet 321 is located at the downstream end of the corresponding one of the plurality of inner intake passageways 32. An air inlet 322 is formed on the outer surface of the cylinder head 222 of each of the plurality of cylinders 22. The air inlet 322 is located at the upstream end of the corresponding one of the inner intake passageways 32. For each of the combustion chambers 224, only one combustion-chamber air inlet 321 or a plurality of combustion-chamber air inlets 321 may be formed. In the present embodiment, only one combustion-chamber air inlet 321 is formed for each of the combustion chambers 224.

An intake valve 33 that opens and closes the combustion-chamber air inlet 321 is positioned in each of the inner intake passages 32A defined by the respective inner intake passageways 32. One intake valve 33 is provided for each of the combustion-chamber air inlets 321. In other words, intake valves 33 are provided for the combustion-chamber air inlets 321 on a one-to-one basis. The intake valve 33 is driven by a valve actuator (not shown) positioned in the cylinder head 222 of the corresponding one of the plurality of cylinders 22. The valve actuator moves along with the crankshaft 241.

The outer intake passageway 34 is a part of the intake passageway 30. The outer intake passageway 34 defines an outer intake passage 34A, which is a part of the intake passage 30A. The outer intake passageway 34 is connected to each of the plurality of inner intake passageways 32. Accordingly, the downstream end part of the outer intake passageway 34 diverges. The downstream end part of the outer intake passageway 34 diverges into branch tubes that are connected to the respective inner-intake-passage-defining parts of the cylinder heads 222 of the cylinders 22, i.e., to the respective inner intake passageways 32. The outer intake passageway 34 has an atmospheric air inlet 341 that is open to the atmosphere. The atmospheric air inlet 341 is at the upstream end of the outer intake passageway 34. Air is taken in from the atmosphere through the atmospheric air inlet 341. The air taken in the outer intake passageway 34 through the atmospheric air inlet 341 is supplied to the engine 20. The outer intake passageway 34 will be described in more detail later.

The air cleaner 40 is positioned in the intake passageway 30. Specifically, the air cleaner 40 is positioned in the outer intake passageway 34. The air cleaner 40 cleans the air taken in through the atmospheric air inlet 341. Thus, the air supplied to the engine 20 is air that already passed through the air cleaner 40, i.e., air that is cleaned by the air cleaner 40.

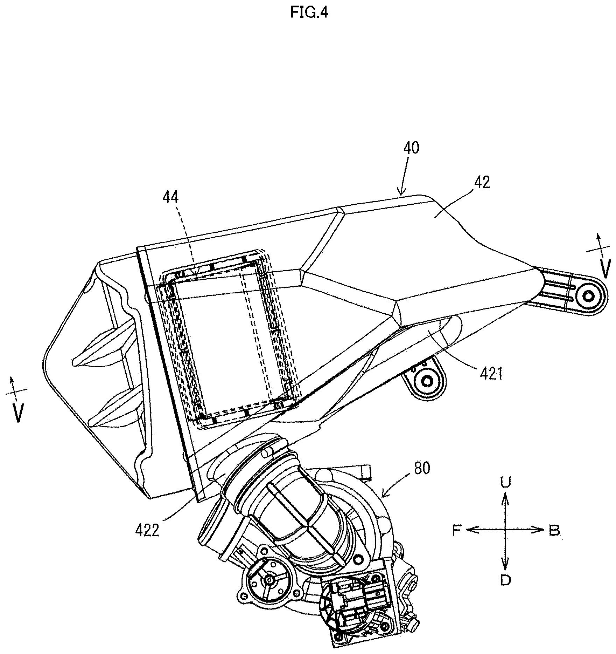

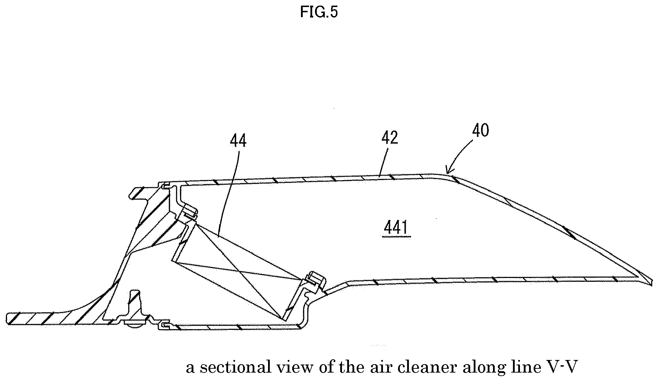

With reference to FIGS. 4 and 5, the air cleaner 40 will be described in more detail. FIG. 4 is a side view of the air cleaner 40. FIG. 5 is a sectional view along line V-V shown in FIG. 4.

The air cleaner 40 includes an air cleaner housing 42 and an air filter 44. These will be described below.

The air cleaner housing 42 defines an air filter encasing space 420 in which the air filter 44 is encased. The air filter 44 is encased in the air cleaner housing 42.

The air filter 44 removes foreign matters (for example, dust, dirt, etc.) in the air taken into the air cleaner housing 42. The air filter 44 may be a dry filter or a wet filter.

An inlet 421 and an outlet 422 are formed in the air cleaner housing 42. These will be described below.

The inlet 421 is formed in such a manner so as to connect the air filter encasing space 420 and the space around the air cleaner housing 42. Accordingly, the air around the air cleaner housing 42 can be taken into the air filter encasing space 420 through the inlet 421. Thus, in this embodiment, the inlet 421 functions as an atmospheric air inlet 341. The inlet 421, for example, includes a hole that connects the air filter encasing space 420 and the space around the air cleaner housing 42, and a peripheral part of the hole. With respect to the direction of air flow in the air cleaner housing 42, the inlet 421 is located upstream from the air filter 44 positioned in the air cleaner housing 42. The inlet 421 faces vehicle-downward D. The inlet 421 is positioned entirely more rearward than the outlet 422. The inlet 421 is positioned entirely more upstream than the outlet 422.

The outlet 422 is formed in such a manner that the air that passed through the air filter 44 passes through the outlet 422. In other words, with respect to the direction of air flow in the air cleaner housing 42, the outlet 422 is located downstream from the air filter 44 positioned in the air cleaner housing 42. The outlet 422, for example, includes a hole that is connected to the air filter encasing space 420, and a peripheral part of the hole. The outlet 422 is connected to the turbocharger 80. Accordingly, the air that passed through the air filter 44 is supplied to the turbocharger 80. The outlet 422 faces vehicle-downward D.

As mentioned above, the air cleaner 40 is connected to the turbocharger 80. With respect to the direction of intake air flow in the outer intake air passageway 34, the air cleaner 40 is positioned upstream from the turbocharger 80. The position of the air cleaner 40 will be described in more detail later.

As shown in FIG. 3, the throttle valve 50 is positioned in the intake passageway 30. Specifically, the throttle valve 50 is positioned in the outer intake passageway 34 of the intake passageway 30. Thus, the throttle valve 50 is positioned in the outer intake passage 34A defined by the outer intake passageway 34 of the intake passageway 30. With respect to the direction of intake air flow in the outer intake passageway 34, the throttle valve 50 is positioned downstream from the air cleaner 40.

Only one throttle valve 50 is provided for all the plurality of combustion chambers 224. In other words, the throttle valve 50 is a common throttle valve for the plurality of combustion chambers 224. Thus, the throttle valve 50 is one single throttle valve.

The throttle valve 50 is positioned in the outer intake passage 34A in such a manner so as to be rotatable around a specified rotation axis to adjust the amount of intake air flowing toward the plurality of combustion chambers 224. The rotation axis extends in a direction perpendicular to the direction of intake air flow in the intake passageway 30. The throttle valve 50 is positioned in the outer intake passageway 34A while being fixed to a rotation shaft 52 that is rotatable relative to the outer intake passageway 34. The adjustment of the amount of intake air flowing toward the plurality of combustion chambers 224 is implemented, for example, by changing the open/close state of the outer intake passageway 34 in accordance with the rotation of the throttle valve 50 around the rotation axis. The throttle valve 50 is fixed to the rotation shaft 52, for example, by a screw or the like.

The straddled vehicle 10 further includes an acceleration operator 19. The acceleration operator 19 is attached to the handlebar 18.

The throttle valve 50 works along with operation of the acceleration operator 19. Specifically, when the acceleration operator 19 is rotated in a particular direction (which will hereinafter be referred to as first direction), the throttle valve 50 is actuated to increase the amount of intake air flowing in the outer intake passage 34A. When the acceleration operator 19 is rotated in a direction opposite to the first direction (which will hereinafter be referred to as second direction), the throttle valve 50 is actuated to decrease the amount of intake air flowing in the outer intake passage 34A. Thus, the throttle valve 50 adjusts the amount of intake air flowing in the outer intake passage 34A in accordance with operation of the acceleration operator 19. The degree of opening of the throttle valve 50 is adjusted in accordance with the degree of rotation in the first direction of the acceleration operator 19.

The plurality of injectors 60 sprays fuel into the corresponding combustion chambers 224. Specifically, each of the plurality of injectors 60 sprays fuel toward the intake air supplied to the corresponding one of the plurality of combustion chambers 224. In other words, the plurality of injectors 60 spray fuel toward the intake air, which already passed through the air cleaner 40 and the intercooler 90 positioned in the outer intake passageway 34 of the intake passageway 30.

The plurality of injectors 60 is positioned in the cylinder heads 222 of the respective cylinders 22 on a one-to-one basis. Thus, the plurality of injectors 60 is arranged in such a manner that one injector 60 is provided for each of the combustion chambers 224.

The straddled vehicle 10 further includes a fuel tank 15. The plurality of injectors 60 is connected to a fuel pump (not shown) positioned in the fuel tank 15. The fuel pump pumps the fuel in the fuel tank 15 to the plurality of injectors 60.

The exhaust passageway 70 defines an exhaust passage 70Ain which an exhaust gas from the engine 20 flows. Specifically, the exhaust passageway 70 defines the exhaust passage 70Ain which an exhaust gas from the plurality of combustion chambers 224 flows.

The exhaust passage 70A is a space through which the exhaust gas from the plurality of combustion chambers 224 passes. The exhaust passageway 70 is a structure including walls and others that form the space through which the exhaust gas from the plurality of combustion chambers 224 passes.

The exhaust passageway 70 includes a plurality of (in this embodiment, three) inner exhaust passageways 72 and an outer exhaust passageway 74. These will be described below.

Each of the plurality of inner exhaust passageways 72 is a part of the exhaust passageway 70. Each of the plurality of inner exhaust passageways 72 define inner exhaust passages 72A that is a part of the exhaust passage 70A. Each of the plurality of inner exhaust passageways 72 is constructed by a part of the cylinder head 222 of the corresponding cylinder 22. In other words, each of the inner exhaust passages 72A, which is a part of the exhaust passage 70, is formed in the cylinder head 222 of the corresponding one of the plurality of cylinders 22. The space defined by each of the inner exhaust passageways 72, that is, the space for a flow of exhaust gas from each of the combustion chambers 224 is connected to the corresponding one of the plurality of combustion chambers 224. Thus, the inner exhaust passages 72A (which are parts of the exhaust passage 70A) defined by the respective inner exhaust passageways 72 are connected to the corresponding combustion chambers 224.

A combustion-chamber air outlet 721 is formed on the combustion-chamber-224-defining face of the cylinder head 222 of each of the plurality of cylinders 22. The combustion-chamber air outlet 721 is located at the upstream end of the corresponding one of the plurality of inner exhaust passageways 72. An air outlet 722 is formed on the outer surface of the cylinder head 222 of each of the plurality of cylinders 22. The air outlet 722 is located at the downstream end of the corresponding one of the inner exhaust passageways 72. Only one combustion-chamber air outlet 721 or alternatively a plurality of combustion-chamber air outlets 721 may be provided for each of the combustion chambers 224. In the present embodiment, only one combustion-chamber air outlet 721 is formed for each of the combustion chambers 224.

An exhaust valve 73 is positioned in each of the inner exhaust passages 72A defined by the respective inner exhaust passageways 72 so as to open and close the corresponding combustion-chamber air outlet 721. Only one exhaust valve 73 is provided for each of the combustion-chamber air outlets 721. In other words, exhaust valves 73 are provided for the combustion-chamber air outlets 721 on a one-to-one basis. As in the case with the intake valves 33, each of the exhaust valves 73 is driven by a valve actuator (not shown) positioned in the cylinder head 222 of the corresponding one of the plurality of cylinders 22.

The outer exhaust passageway 74 is a part of the exhaust passageway 70. The outer exhaust passageway 74 defines an outer exhaust passage 74A, which is a part of the exhaust passage 70A. The outer exhaust passageway 74 is connected to each of the plurality of inner exhaust passageways 72. Specifically, the upstream end part of the outer exhaust passageway 74 diverges. For example, the upstream end part of the outer exhaust passageway 74 is formed of branch tubes that are connected to the respective inner-exhaust-passage-defining part of the cylinder heads 222 of the cylinders 22, i.e., to the respective inner exhaust passageways 72.

The outer exhaust passageway 74 includes a plurality of outer branch exhaust passageways 741. Each of the plurality of outer branch exhaust passageways 741 is formed in the upstream end part of the outer exhaust passageway 74. Thus, the upstream end part of the outer exhaust passageway 74 diverges into a plurality of outer branch exhaust passageways 741.

The plurality of outer branch exhaust passageways 741 respectively defines outer branch exhaust passages 741A. The outer branch exhaust passages 741A are parts of the outer exhaust passage 74A.

The upstream end of each of the plurality of outer branch exhaust passageways 741 is connected to the air outlet 722 formed on the outer surface of the cylinder head 222 of the corresponding one of the cylinder heads 22, that is, connected to the part of the cylinder head 222 enclosing the downstream end of the inner exhaust passage 72A formed therein. In other words, the respective upstream ends of the outer branch exhaust passages 741A (which are defined by the respective outer branch exhaust passageways 741) are connected to the respective downstream ends of the corresponding inner exhaust passages 72A (which are defined by the respective inner exhaust passageways 72). Thus, the spaces formed by the respective outer branch exhaust passageways 741 are connected to the corresponding spaces formed by the respective inner exhaust passageways 72. This arrangement allows exhaust air to flow from the plurality of inner exhaust passages 72A into the outer exhaust passage 74A.

The outer exhaust passageway 74 includes a muffler 76 and a catalyst unit 78. Thus, the muffler 76 and the catalyst unit 78 are positioned in the outer exhaust passageway 74.

The muffler 76 reduces noise caused by the flow of exhaust gas in the exhaust passageway 70. The muffler 76 has an air ejection hole 761 facing the atmosphere. The exhaust gas flowing in the exhaust passageway 70 passes through the catalyst unit 78 and thereafter is emitted into the atmosphere through the air ejection hole 761.

The catalyst unit 78 includes a main catalyst section 781 containing a catalyst. The main catalyst section 781 is what is called a three-way catalytic converter. The main catalyst section 781 cleans the exhaust gas from the combustion chambers 224. Specifically, the exhaust gas from the combustion chambers 224 flows into the catalyst unit 78 and passes through the main catalyst section 781, whereby the exhaust gas is cleaned. In this way, the catalyst unit 78 cleans the exhaust gas. The position of the catalyst unit 78 will be described in more detail later.

Next, the turbocharger 80 will be described with reference to FIGS. 1 and 3. The turbocharger 80 is driven by the exhaust gas flowing in the exhaust passageway 70 and compresses the intake air flowing in the intake passageway 30. Specifically, the turbocharger 80 is driven by the exhaust gas flowing in the outer exhaust passageway 74 and compresses the intake air flowing in the outer intake passageway 34. The position of the turbocharger 80 will be described later.

The turbocharger 80 includes a turbine wheel 81, a compressor wheel 82, and a connecting shaft 83. These will be described below.

The turbine wheel 81 includes a shaft and a plurality of blades. The plurality of blades is arranged on the circumference of the shaft, for example. The plurality of blades is arranged radially, for example.

The turbine wheel 81 is positioned in the exhaust passageway 70. Specifically, the turbine wheel 81 is positioned in the outer exhaust passageway 74.

The outer exhaust passageway 74 includes a scroll exhaust passageway 74S. The scroll exhaust passageway 74S is formed in such a manner so as to circle around the turbine wheel 81. The scroll exhaust passageway 74S is positioned upstream from the turbine wheel 81 with respect to the direction of exhaust gas flow in the outer exhaust passageway 74.

The compressor wheel 82 includes a shaft and a plurality of blades. The plurality of blades is arranged on the circumference of the shaft, for example. The plurality of blades is arranged radially, for example.

The compressor wheel 82 is positioned in the intake passageway 30. Specifically, the compressor wheel 82 is positioned in the outer intake passageway 34.

The compressor wheel 82 is positioned downstream from the air cleaner 40 with respect to the direction of intake air flow in the outer intake passageway 34. The compressor wheel 82 is positioned upstream from the throttle vale 50 with respect to the direction of intake air flow in the outer intake passageway 34. Thus, the turbocharger 80 is positioned upstream from the throttle valve 50 with respect to the direction of intake air flow in the intake passageway 30.

The outer intake passageway 34 includes a scroll intake passageway 34S. The scroll intake passageway 34S is formed in such a manner so as to circle around the compressor wheel 82. The scroll intake passageway 34S is positioned downstream from the compressor wheel 82 with respect to the direction of intake air flow in the outer intake passageway 34.

The connecting shaft 83 connects the turbine wheel 81 and the compressor wheel 82. The connecting shaft 83 is supported by a housing in such a manner so as to be rotatable around an axis extending in Vehicle-Left-Right Direction LR. Thus, the turbine wheel 81 and the compressor wheel 82 are rotatable around the central axis of the connecting shaft 83. The compressor wheel 82 is connected to the turbine wheel 81 in such a manner so as to rotate together with the turbine wheel 81. There is a common rotation axis CL around which both the turbine wheel 81 and the compressor wheel 82 are rotatable. The common rotation axis CL is the same as the central axis of the connecting shaft 83.

Since the turbocharger 80 has the structure above, the exhaust gas flowing in the scroll exhaust passageway 74S blows to the outer periphery of the turbine wheel 81. Thereby, the turbine wheel 81 rotates. The exhaust gas blowing to the outer periphery of the turbine wheel 81 flows out from the turbine wheel 81 in the direction along the central axis of the connecting shaft 83. Along with the rotation of the turbine wheel 81, the compressor wheel 82 rotates. Thereby, the compressor wheel 82 sucks in air in the direction along the central axis of the connecting shaft 83. The compressor wheel 82 compresses the intake air and blows out the compressed air from the periphery. The compressed air blown out from the periphery of the compressor wheel 82 flows into the scroll intake passageway 34S. Thereafter, the compressed air is cooled by the intercooler 90 and supplied to each of the plurality of combustion chambers 224. Since each of the plurality of combustion chambers 224 is supplied with compressed air, the efficiency of air intake is improved. Accordingly, the output of the engine 20 is increased.

Next, the intercooler 90 will be described with reference to FIGS. 1 and 3. The intercooler 90 cools the intake air compressed by the turbocharger 80. Thus, the air flowing in the outer intake passageway 34 is cooled by the intercooler 90.

The intercooler 90 is positioned in the outer intake passageway 34. The intercooler 90 is positioned downstream from the compressor wheel 82 of the turbocharger 80 with respect to the direction of intake air flow in the outer intake passageway 34. In other words, the intercooler 90 is positioned downstream from the turbocharger 80 with respect to the direction of intake air flow in the outer intake passageway 34. The intercooler 90 is positioned upstream from the throttle valve 50 with respect to the direction of intake air flow in the outer intake passageway 34. Thus, the intercooler 90 is positioned in the intake passageway 30, between the turbocharger 80 and the throttle valve 50 with respect to the direction of intake air flow in the intake passageway 30.

The air compressed by the compressor wheel 82 of the turbocharger 80 flows into the intercooler 90. The intercooler 90 cools the air, of which the temperature was raised by the compression. This heightens the density of air supplied to the engine 20 and improves the efficiency of air intake.

The intercooler 90 is an air-cooled type. The intercooler 90 is positioned at a place that is blown by wind while the straddled vehicle 10 is moving. Accordingly, the air flowing in the outer intake passageway 34 is cooled by air blowing to the intercooler 90 while the straddled vehicle 10 is moving.

As shown in FIG. 1, from a view in Vehicle-Front-Back Direction FB, the intercooler 90 is positioned more upward than the common rotation axis CL of the turbine wheel 81 and the compressor wheel 82. From a view in Vehicle-Front-Back Direction FB, the intercooler 90 is positioned more rightward and in line with the air cleaner 40. From a view in Vehicle-Front-Back Direction FB, the intercooler 90 is positioned more upward than and in line with the catalyst unit 78.

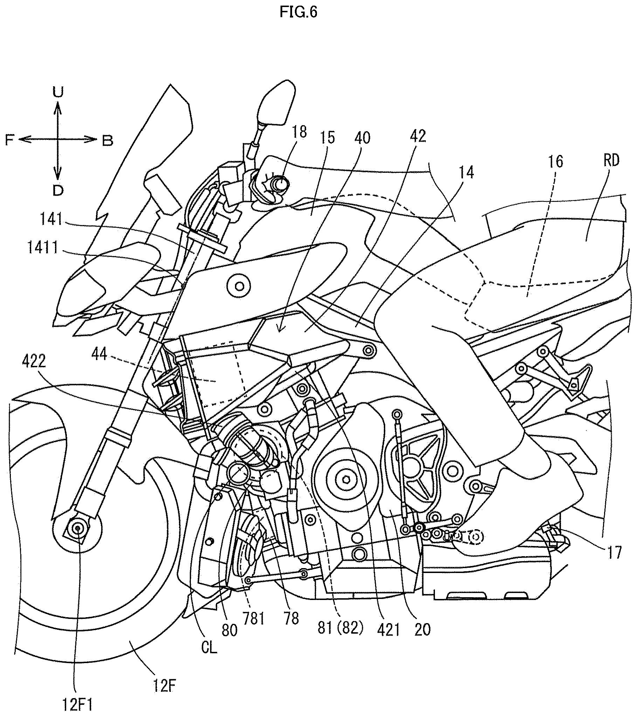

Next, with reference to FIG. 6, the position of the turbocharger 80 will be described. FIG. 6 is an enlarged view of a part of FIG. 2.

From a view in Vehicle-Left-Right Direction LR, the turbocharger 80 is positioned entirely more frontward than the seat 16. In other words, from a view in Vehicle-Left-Right Direction LR, the seat 16 is positioned entirely more rearward than the turbocharger 80. From a view in Vehicle-Left-Right Direction LR, the turbocharger 80 is positioned entirely more downward than the seat 16. In other words, from a view in Vehicle-Left-Right Direction LR, the seat 16 is positioned entirely more upward than the turbocharger 80.

From a view in Vehicle-Left-Right Direction LR, the turbocharger 18 is positioned entirely more frontward than the pair of left and right footrests 17. In other words, from a view in Vehicle-Left-Right Direction LR, the pair of left and right footrests 17 is positioned entirely more rearward than the turbocharger 80. From a view in Vehicle-Left-Right Direction LR, the turbocharger 80 is positioned entirely more upward than the pair of left and right footrests 17. In other words, from a view in Vehicle-Left-Right Direction LR, the pair of left and right footrests 17 is positioned entirely more downward than the turbocharger 80.

From a view in Vehicle-Left-Right Direction LR, the common rotation axis CL of the turbine wheel 81 and the compressor wheel 82 of the turbocharger 80 is positioned more downward than the lower end of the air cleaner 40. Accordingly, from a view in Vehicle-Left-Right Direction LR, the common rotation axis CL of the turbine wheel 81 and the compressor wheel 82 of the turbocharger 80 is positioned more downward than the air cleaner 40.

From a view in Vehicle-Left-Right Direction LR, the common rotation axis CL of the turbine wheel 81 and the compressor wheel 82 of the turbocharger 80 is positioned more frontward than the inlet 421 of the air cleaner 40. From a view in Vehicle-Left-Right Direction LR, the common rotation axis CL of the turbine wheel 81 and the compressor wheel 82 of the turbocharger 80 is positioned more rearward than the outlet 421 of the air cleaner 40. From a view in Vehicle-Left-Right Direction LR, the common rotation axis CL of the turbine wheel 81 and the compressor wheel 82 of the turbocharger 80 is positioned more rearward than the air filter 44 of the air cleaner 40.

From a view in Vehicle-Left-Right Direction LR, the turbocharger 80 is positioned more downward than and in line with the air cleaner 40. Specifically, from a view in Vehicle-Left-Right Direction LR, the turbine wheel 81 and the compressor wheel 82 of the turbocharger 80 are each positioned more downward than and in line with the air cleaner 40.

From a view in Vehicle-Left-Right Direction LR, the turbocharger 80 is positioned more downward than and in line with the outlet 422 of the air cleaner 40. Specifically, from a view in Vehicle-Left-Right Direction LR, the turbine wheel 81 and the compressor wheel 82 of the turbocharger 80 are each positioned more downward than and in line with the outlet 422 of the air cleaner 40.

From a view in Vehicle-Left-Right Direction LR, the turbocharger 80 is positioned more downward than and in line with the air filter 44 of the air cleaner 40. Specifically, from a view in Vehicle-Left-Right Direction LR, the turbine wheel 81 and the compressor wheel 82 of the turbocharger 80 are each positioned more downward than and in line with the air filter 44 of the air cleaner 40.

From a view in Vehicle-Left-Right Direction LR, the turbocharger 80 is positioned more upward than and in line with the catalyst unit 78. Specifically, from a view in Vehicle-Left-Right Direction LR, the turbocharger 80 is positioned more upward than and in line with the main catalyst section 781 of the catalyst unit 78.

More specifically, from a view in Vehicle-Left-Right Direction LR, the turbine wheel 81 and the compressor wheel 82 of the turbocharger 80 are each positioned more upward than and in line with the catalyst unit 78. Thus, from a view in Vehicle-Left-Right Direction LR, the turbine wheel 81 and the compressor wheel 82 of the turbocharger 80 are each positioned more upward than and in line with the main catalyst section 781 of the catalyst unit 78.

Next, with reference to FIG. 1, the position of the turbocharger 80 will be described in more detail.

The turbocharger 80 has a part that covers or is covered by the engine 20 from a view in Vehicle-Front-Back Direction FB. Specifically, the turbine wheel 81 and the compressor wheel 82 of the turbocharger 80 each have a part that covers or is covered by the engine 20 from a view in Vehicle-Front-Back Direction FB.

From a view in Vehicle-Front-Back Direction FB, the turbocharger 80 is positioned entirely more upward than the catalyst unit 78. Specifically, from a view in Vehicle-Front-Back Direction FB, the turbine wheel 81 and the compressor wheel 82 of the turbocharger 80 are each positioned entirely more upward than the catalyst unit 78.

More specifically, from a view in Vehicle-Front-Back Direction FB, the turbocharger 80 is positioned entirely more upward than the main catalyst 781 of the catalyst unit 78. Thus, the turbine wheel 81 and the compressor wheel 82 of the turbocharger 80 are each positioned entirely more upward than the main catalyst section 781 of the catalyst unit 78.

From a view in Vehicle-Front-Back Direction FB, the turbine wheel 81 and the compressor wheel 82 are each positioned entirely more leftward than the catalyst unit 78. Specifically, from a view in Vehicle-Front-Back Direction FB, the turbine wheel 81 and the compressor wheel 82 are each positioned entirely more leftward than the catalyst unit 78.

More specifically, from a view in Vehicle-Front-Back Direction FB, the turbocharger 80 is positioned entirely more leftward than the main catalyst section 781 of the catalyst unit 78. Thus, the turbine wheel 81 and the compressor wheel 82 of the turbocharger 80 are each positioned entirely more leftward than the main catalyst section 781 of the catalyst unit 78.

From a view in Vehicle-Front-Back Direction FB, the turbocharger 80 is positioned entirely more rightward than the air cleaner 40. Specifically, from a view in Vehicle-Front-Back Direction FB, the turbine wheel 81 and the compressor wheel 82 of the turbocharger 80 are each positioned entirely more rightward than the air cleaner 40.

From a view in Vehicle-Front-Back Direction FB, the common rotation axis CL of the turbine wheel 81 and the compressor wheel 81 of the turbocharger 80 is positioned more downward than the air cleaner 40. From a view in Vehicle-Front-Back Direction FB, the common rotation axis CL of the turbine wheel 81 and the compressor wheel 81 of the turbocharger 80 is positioned more downward than the lower end of the air cleaner 40.

Next, with reference to FIG. 6, the position of the catalyst unit 78 will be described in more detail.

From a view in Vehicle-Left-Right Direction LR, the catalyst unit 78 is positioned more downward than and in line with the air cleaner 40. Specifically, from a view in Vehicle-Left-Right Direction LR, the main catalyst section 781 of the catalyst unit 78 is positioned more downward than and in line with the air cleaner 40.

From a view in Vehicle-Left-Right Direction LR, the catalyst unit 78 is positioned more downward than and in line with the inlet 421 of the air cleaner 40. More specifically, from a view in Vehicle-Left-Right Direction LR, the main catalyst 781 of the catalyst unit 78 is positioned more downward than and in line with the inlet 421 of the air cleaner 40.

From a view in Vehicle-Left-Right Direction LR, the catalyst unit 78 is positioned more downward than and in line with the turbocharger 80. Specifically, from a view in Vehicle-Left-Right Direction LR, the main catalyst section 781 of the catalyst unit 78 is positioned more downward than and in line with the turbocharger 80.

More specifically, from a view in Vehicle-Left-Right Direction LR, the catalyst unit 78 is positioned more downward than and in line with the turbine wheel 81 and the compressor wheel 82 of the turbocharger 80. Thus, from a view in Vehicle-Left-Right Direction LR, the main catalyst section 781 of the catalyst unit 78 is positioned more downward than and in line with the turbine wheel 81 and the compressor wheel 82 of the turbocharger 80.

Next, with reference to FIG. 1, the position of the catalyst unit 78 will be described in more detail.

The catalyst unit 78 has a part that covers or is covered by the engine 20 from a view in Vehicle-Front-Back Direction FB. Specifically, the main catalyst section 781 of the catalyst unit 78 has a part that covers or is covered by the engine 20 from a view in Vehicle-Front-Back Direction FB.

The catalyst unit 78 is positioned downstream from the turbine wheel 81 with respect to the direction of exhaust gas flow in the exhaust passageway 70. Specifically, the main catalyst section 781 of the catalyst unit 78 is positioned downstream from the turbine wheel 81 with respect to the direction of exhaust gas flow in the exhaust passageway 70.

From a view in Vehicle-Front-Back Direction FB, the catalyst unit 78 is positioned entirely more rightward than the turbocharger 80. Specifically, from a view in Vehicle-Front-Back Direction FB, the main catalyst section 781 of the catalyst unit 78 is positioned entirely more rightward than the turbocharger 80.

From a view in Vehicle-Front-Back Direction FB, the catalyst unit 78 is positioned entirely more downward than the turbocharger 80. Specifically, from a view in Vehicle-Front-Back Direction FB, the catalyst unit 78 is positioned entirely more downward than the common rotation axis CL of the turbine wheel 81 and the compressor wheel 82 of the turbocharger 80.

More specifically, from a view in Vehicle-Front-Back Direction FB, the main catalyst section 781 of the catalyst unit 78 is positioned entirely more downward than the turbocharger 80. Thus, from a view in Vehicle-Front-Back Direction FB, the main catalyst section 781 of the catalyst unit 78 is positioned entirely more downward than the common rotation axis CL of the turbine wheel 81 and the compressor wheel 82 of the turbocharger 80.

From a view in Vehicle-Front-Back Direction FB, the catalyst unit 78 is positioned entirely more rightward than the air cleaner 40. Specifically, from a view in Vehicle-Front-Back Direction FB, the main catalyst section 781 of the catalyst unit 78 is positioned entirely more rightward than the air cleaner 40.

From a view in Vehicle-Front-Back Direction FB, the catalyst unit 78 is positioned entirely more downward than the air cleaner 40. Specifically, from a view in Vehicle-Front-Back Direction FB, the catalyst unit 78 is positioned entirely more downward than the lower end of the air cleaner 40.

More specifically, from a view in Vehicle-Front-Back Direction FB, the main catalyst section 781 of the catalyst unit 78 is positioned entirely more downward than the air cleaner 40. Thus, from a view in Vehicle-Front-Back Direction FB, the main catalyst section 781 of the catalyst unit 78 is positioned entirely more downward than the lower end of the air cleaner 40.

Next, with reference to FIG. 6, the position of the air cleaner 40 will be described in more detail.

From a view in Vehicle-Left-Right Direction LR, the air cleaner 40 is positioned more upward than and in line with the turbocharger 80. Accordingly, from a view in Vehicle-Left-Right Direction LR, the air cleaner 40 is positioned in line with the turbocharger 80 in Vehicle-Up-Down Direction UD. Specifically, from a view in Vehicle-Left-Right Direction LR, the air cleaner housing 42 of the air cleaner 40 is positioned in line with the turbine wheel 81 and the compressor wheel 82 of the turbocharger 80 in Vehicle-Up-Down Direction UD. In other words, from a view in Vehicle-Left-Right Direction LR, the air filter encasing space 420 defined by the air cleaner housing 42 is positioned in line with the turbine wheel 81 and the compressor wheel 82 of the turbocharger 80 in Vehicle-Up-Down Direction UD.

From a view in Vehicle-Left-Right Direction LR, the air cleaner 40 is positioned more upward than and in line with the catalyst unit 78. Accordingly, from a view in Vehicle-Left-Right Direction LR, the air cleaner 40 is positioned in line with the catalyst unit 78 in Vehicle-Up-Down Direction UD. Specifically, from a view in Vehicle-Left-Right Direction LR, the air cleaner housing 42 of the air cleaner 40 is positioned in line with the main catalyst section 781 of the catalyst unit 78 in Vehicle-Up-Down Direction UD. In other words, from a view in Vehicle-Left-Right Direction LR, the air filter encasing space 420 defined by the air cleaner housing 42 is positioned in line with the main catalyst section 781 of the catalyst unit 78 in Vehicle-Up-Down Direction UD.

In this embodiment, as described above, from a view in Vehicle-Left-Right Direction LR, the air cleaner 40 is positioned in line with the catalyst unit 78 and the turbocharger 80 in Vehicle-Up-Down Direction UD. However, from a view in Vehicle-Left-Right Direction LR, the air cleaner 40 may be positioned in line with at least one of the catalyst unit 78 or the turbocharger 80 in Vehicle-Up-Down Direction UD. Specifically, from a view in Vehicle-Left-Right Direction LR, the air cleaner housing 42 of the air cleaner 40 may be positioned in line with at least one of the main catalyst section 781, the turbine wheel 81 or the compressor wheel 82 in Vehicle-Up-Down Direction UD. More specifically, from a view Vehicle-Left-Right Direction LR, the air filter encasing space 420 defined by the air cleaner housing 42 may be positioned in line with at least one of the main catalyst section 781, the turbine wheel 81 or the compressor wheel 82 in Vehicle-Up-Down Direction UD.

From a view in Vehicle-Left-Right Direction LR, the lower end of the air cleaner 40 is positioned more downward than the upper end of the turbocharger 80. Additionally, from a view in Vehicle-Left-Right Direction LR, the lower end of the air cleaner 40 is positioned more frontward than the upper end of the turbocharger 80. Specifically, from a view in Vehicle-Left-Right Direction LR, the lower end of the air cleaner 40 is positioned more frontward than the rotation axis CL of the turbine wheel 81 and the compressor wheel 82 of the turbocharger 80.

From a view in Vehicle-Left-Right Direction LR, the air cleaner 40 is positioned entirely more upward than the rotation axis 12F1 of the front wheel 12F. Accordingly, from a view in Vehicle-Left-Right Direction LR, the lower end of the air cleaner 40 is positioned more upward than the rotation axis of the 12F1 of the front wheel 12F.

From a view in Vehicle-Left-Right Direction LR, the upper end of the air cleaner 40 is positioned more downward than the upper end of the head pipe 141. Specifically, from a view in Vehicle-Left-Right Direction LR, the upper end of the air cleaner 40 is positioned more downward than the center of the head pipe 141 with respect to the axial direction of the head pipe 141. Additionally, from a view in Vehicle-Left-Right Direction LR, the upper end of the air cleaner 40 is positioned more upward than the lower end of the head pipe 141.

From a view in Vehicle-Left-Right Direction LR, the front end of the air cleaner 40 is positioned more frontward than the turbocharger 80. Specifically, from a view in Vehicle-Left-Right Direction LR, the front end of the air cleaner 40 is positioned more frontward than the turbine wheel 81 and the compressor wheel 82 of the turbocharger 80. More specifically, from a view in Vehicle-Left-Right Direction LR, the front end of the air cleaner 40 is positioned more frontward than the rotation axis CL of the turbine wheel 81 and the compressor wheel 82 of the turbocharger 80. Additionally, from a view in Vehicle-Left-Right Direction LR, the front end of the air cleaner 40 is positioned more frontward than the rear end of the front wheel 12F.

From a view in Vehicle-Left-Right Direction LR, the rear end of the air cleaner 40 is positioned more rearward than the turbocharger 80. Specifically, from a view in Vehicle-Left-Right Direction LR, the rear end of the air cleaner 40 is positioned more rearward than the turbine wheel 81 and the compressor wheel 82 of the turbocharger 80. More specifically, from a view in Vehicle-Left-Right Direction LR, the rear end of the air cleaner 40 is positioned more rearward than the rotation axis CL of the turbine wheel 81 and the compressor wheel 82 of the turbocharger 80.

From a view in Vehicle-Left-Right Direction LR, the air cleaner 40 has a greater dimension in Vehicle Front-Back Direction FB than in Vehicle-Up-Down Direction UD.

From a view in Vehicle-Left-Right Direction LR, the dimension in Vehicle Front-Back Direction FB of the air cleaner 40 is greater than the dimension in Vehicle-Front-Back Direction FB of the catalyst unit 78. Specifically, from a view in Vehicle-Left-Right Direction LR, the dimension in Vehicle Front-Back Direction FB of the air cleaner 40 is greater than the dimension in Vehicle-Front-Back Direction FB of the main catalyst section 781 of the catalyst unit 78.

From a view in Vehicle-Left-Right Direction LR, the dimension in Vehicle-Front-Back Direction FB of the air cleaner 40 is greater than the dimension in Vehicle-Front-Back Direction FB of the turbocharger 80. Specifically, from a view in Vehicle-Left-Right Direction LR, the dimension in Vehicle-Front-Back Direction FB of the air cleaner 40 is greater than the dimension in Vehicle-Front-Back Direction FB of the turbine wheel 81 of the turbocharger 80 and greater than dimension in Vehicle-Front-Back Direction FB of the compressor wheel 82 of the turbocharger 80.

From a view in Vehicle-Left-Right Direction LR, the dimension in Vehicle-Up-Down Direction UD of the air cleaner 40 is greater than the dimension in Vehicle-Up-Down Direction UD of the catalyst unit 78. Specifically, from a view in Vehicle-Left-Right Direction LR, the dimension in Vehicle-Up-Down Direction UD of the air cleaner 40 is greater than the dimension in Vehicle-Up-Down Direction UD of the main catalyst section 781 of the catalyst unit 78.

From a view in Vehicle-Left-Right Direction LR, the dimension in Vehicle-Up-Down Direction UD of the air cleaner 40 is greater than the dimension in Vehicle-Up-Down Direction UD of the turbocharger 80. Specifically, from a view in Vehicle-Left-Right Direction LR, the dimension in Vehicle-Up-Down Direction UD of the air cleaner 40 is greater than the dimension in Vehicle-Up-Down Direction UD of the turbine wheel 81 of the turbocharger 80 and the dimension in Vehicle-Front-Back Direction UD of the compressor wheel 82 of the turbocharger 80.

From a view in Vehicle-Left-Right Direction LR, the inlet 421 of the air cleaner 40 is positioned more upward than and in line with the turbocharger 80. Specifically, from a view in Vehicle-Left-Right Direction LR, the inlet 421 of the air cleaner 40 is positioned more upward than and in line with the turbine wheel 81 and the compressor wheel 82 of the turbocharger 80. More specifically, from a view in Vehicle-Left-Right Direction LR, the inlet 421 of the air cleaner 40 is positioned entirely more upward than the rotation axis CL of the turbine wheel 81 and the compressor wheel 82 of the turbocharger 80.

From a view in Vehicle-Left-Right Direction LR, at least part of the inlet 421 of the air cleaner 40 is positioned more rearward than the turbocharger 80. Specifically, from a view in Vehicle-Left-Right Direction LR, at least part of the inlet 421 of the air cleaner 40 is positioned more rearward than the turbine wheel 81 and the compressor wheel 82 of the turbocharger 80. More specifically, from a view in Vehicle-Left-Right Direction LR, at least part of the inlet 421 of the air cleaner 40 is positioned more rearward than the rotation axis CL of the turbine wheel 81 and the compressor wheel 82 of the turbocharger 80.

From a view in Vehicle-Left-Right Direction LR, the inlet 421 of the air cleaner 40 is positioned more upward than and in line with the catalyst unit 78. Specifically, from a view in Vehicle-Left-Right Direction LR, the inlet 421 of the air cleaner 40 is positioned more upward than and in line with the main catalyst section 781 of the catalyst unit 78.

From a view in Vehicle-Left-Right Direction LR, at least part of the inlet 421 of the air cleaner 40 is positioned more rearward than the catalyst unit 78. Specifically, from a view in Vehicle-Left-Right Direction LR, at least part of the inlet 421 of the air cleaner 40 is positioned more rearward than the main catalyst section 781 of the catalyst unit 78.

From a view in Vehicle-Left-Right Direction LR, the outlet 422 of the air cleaner 40 is positioned more upward than and in line with the turbocharger 80. Specifically, from a view in Vehicle-Left-Right Direction LR, the outlet 422 of the air cleaner 40 is positioned more upward than and in line with the turbine wheel 81 and the compressor wheel 82 of the turbocharger 80. According to the invention, from a view in Vehicle-Left-Right Direction LR, the outlet 422 of the air cleaner 40 is positioned entirely more upward than the rotation axis CL of the turbine wheel 81 and the compressor wheel 82 of the turbocharger 80.

From a view in Vehicle-Left-Right Direction LR, at least part of the outlet 422 of the air cleaner 40 is positioned more frontward than the turbocharger 80. Specifically, from a view in Vehicle-Left-Right Direction LR, at least part of the outlet 422 of the air cleaner 40 is positioned more frontward than the turbine wheel 81 and the compressor wheel 82 of the turbocharger 80. More specifically, from a view in Vehicle-Left-Right Direction LR, at least part of the outlet 422 of the air cleaner 40 is positioned more frontward than the rotation axis CL of the turbine wheel 81 and the compressor wheel 82 of the turbocharger 80.

From a view in Vehicle-Left-Right Direction LR, the outlet 422 of the air cleaner 40 is positioned entirely more upward than the catalyst unit 78. Specifically, from a view in Vehicle-Left-Right Direction LR, the outlet 422 of the air cleaner 40 is positioned entirely more upward than the main catalyst section 781 of the catalyst unit 78.

From a view in Vehicle-Left-Right Direction LR, at least part of the outlet 422 of the air cleaner 40 is positioned more frontward than the catalyst section 78. Specifically, from a view in Vehicle-Left-Right Direction LR, at least part of the outlet 422 of the air cleaner 40 is positioned more frontward than the main catalyst section 781 of the catalyst section 78.

From a view in Vehicle-Left-Right Direction LR, the air filter 44 of the air cleaner 40 is positioned more upward than and in line with the turbocharger 80. Specifically, from a view in Vehicle-Left-Right Direction LR, the air filter 44 of the air cleaner 40 is positioned more upward than and in line with the turbine wheel 81 and the compressor wheel 82 of the turbocharger 80. More specifically, from a view in Vehicle-Left-Right Direction LR, the air filter 44 of the air cleaner 40 is positioned entirely more upward than the rotation axis CL of the turbine wheel 81 and the compressor wheel 82 of the turbocharger 80.

From a view in Vehicle-Left-Right Direction LR, at least part of the air filter 44 of the air cleaner 40 is positioned more frontward than the turbocharger 80. Specifically, from a view in Vehicle-Left-Right Direction LR, at least part of the air filter 44 of the air cleaner 40 is positioned more frontward than the turbine wheel 81 and the compressor wheel 82 of the turbocharger 80. More specifically, from a view in Vehicle-Left-Right Direction LR, at least part of the air filter 44 of the air cleaner 40 is positioned more frontward than the rotation axis CL of the turbine wheel 81 and the compressor wheel 82 of the turbocharger 80.

From a view in Vehicle-Left-Right Direction LR, the air filter 44 of the air cleaner 40 is positioned entirely more upward than the catalyst unit 78. Specifically, from a view in Vehicle-Left-Right Direction LR, the air filter 44 of the air cleaner 40 is positioned entirely more upward than the main catalyst section 781 of the catalyst unit 78.

From a view in Vehicle-Left-Right Direction LR, the air filter 44 of the air cleaner 40 is positioned more frontward than the catalyst unit 78. Specifically, from a view in Vehicle-Left-Right Direction LR, at least part of the air filter 44 of the air cleaner 40 is positioned more frontward than the main catalyst section 781 of the catalyst unit 78.

Next, with reference to FIG. 1, the position of the air cleaner will be described in more detail.

From a view in Vehicle-Front-Back Direction FB, the air cleaner 40 is positioned entirely more leftward than the catalyst unit 78. Specifically, from a view in Vehicle-Front-Back Direction FB, the air cleaner 40 is positioned entirely more leftward than the main catalyst 781 of the catalyst unit 78. More specifically, from a view in Vehicle-Front-Back Direction FB, the air cleaner housing 42 of the air cleaner 40 is positioned entirely more leftward than the main catalyst section 781 of the catalyst unit 78. In other words, from a view in Vehicle-Front-Back Direction FB, the air cleaner encasing space 420 defined by the air cleaner housing 42 is positioned entirely more leftward than the main catalyst section 781 of the catalyst unit 78.

From a view in Vehicle-Front-Back Direction FB, the air cleaner 40 is positioned entirely more upward than the catalyst unit 78. Accordingly, from a view in Vehicle-Front-Back Direction FB, the lower end of the air cleaner 40 is positioned more upward than the catalyst unit 78.

From a view in Vehicle-Front-Back Direction FB, the air cleaner 40 is positioned entirely more upward than the main catalyst section 781 of the catalyst unit 78. Accordingly, from a view in Vehicle-Front-Back Direction FB, the lower end of the air cleaner 40 is positioned more upward than the catalyst unit 78.

As described above, from a view in Vehicle-Front-Back Direction FB, the air cleaner housing 42 of the air cleaner 40 is positioned entirely more upward than the main catalyst section 781 of the catalyst unit 78. In other words, from a view in Vehicle-Front-Back Direction FB, the air filter encasing space 420 defined by the air cleaner housing 42 is positioned entirely more upward than the main catalyst section 781 of the catalyst unit 78.

From a view in Vehicle-Front-Back Direction FB, the air cleaner 40 is positioned entirely more leftward than the turbocharger 80. Specifically, from a view in Vehicle-Front-Back Direction FB, the air cleaner 40 is positioned entirely more leftward than the turbine wheel 81 and the compressor wheel 82 of the turbocharger 80. More specifically, from a view in Vehicle-Front-Back Direction FB, the air cleaner housing 42 of the air cleaner 40 is positioned entirely more leftward than the turbine wheel 81 and the compressor wheel 82 of the turbocharger 80. In other words, from a view in Vehicle-Front-Back Direction FB, the air filter encasing space 420 defined by the air cleaner housing 42 is positioned entirely more leftward than the turbine wheel 81 and the compressor wheel 82 of the turbocharger 80.

From a view in Vehicle-Front-Back Direction FB, the air cleaner 40 is positioned entirely more upward than the rotation axis CL of the turbine wheel 81 and the compressor wheel 82 of the turbocharger 80. Specifically, from a view in Vehicle-Front-Back Direction FB, the air cleaner housing 42 of the air cleaner 40 is positioned entirely more upward than the rotation axis CL of the turbine wheel 81 and the compressor wheel 82 of the turbocharger 80. In other words, from a view in Vehicle-Front-Back Direction FB, the air filter encasing space 420 defined by the air cleaner housing 42 is positioned entirely more upward than the rotation axis CL of the turbine wheel 81 and the compressor wheel 82 of the turbocharger 80. Thus, from a view in Vehicle-Front-Back Direction FB, the lower end of the air cleaner 40 is positioned more upward than the rotation axis CL of the turbine wheel 81 and the compressor wheel 82 of the turbocharger 80.

From a view in Vehicle-Front-Back Direction FB, the air cleaner 40 has a smaller dimension in Vehicle-Left-Right Direction LR than in Vehicle-Up-Down Direction UD.

From a view in Vehicle-Front-Back Direction FB, the dimension in Vehicle-Up-Down Direction UD of the air cleaner 40 is greater than the dimension in Vehicle-Up-Down Direction UD of the catalyst unit 78. Specifically, from a view in Vehicle-Front-Back Direction FB, the dimension in Vehicle-Left-Right Direction UD of the air cleaner 40 is greater than the dimension in Vehicle-Up-Down Direction UD of the main catalyst section 781 of the catalyst unit 78.

From a view in Vehicle-Front-Back Direction FB, the dimension in Vehicle-Left-Right Direction UD of the air cleaner 40 is greater than the dimension in Vehicle-Up-Down Direction UD of the turbocharger 80. Specifically, from a view in Vehicle-Front-Back Direction FB, the dimension in Vehicle-Left-Right Direction UD of the air cleaner 40 is greater than the dimension in Vehicle-Up-Down Direction UD of the turbine wheel 81 of the turbocharger 80 and the dimension in Vehicle-Up-Down Direction UD of the compressor wheel 82 of the turbocharger 80.

From a view in Vehicle-Front-Back Direction FB, the dimension in Vehicle-Left-Right Direction LR of the air cleaner 40 is greater than the dimension in Vehicle-Left-Right Direction LR of the catalyst unit 78. Specifically, from a view in Vehicle-Front-Back Direction FB, the dimension in Vehicle-Left-Right Direction LR of the air cleaner 40 is greater than the dimension in Vehicle-Left-Right Direction LR of the main catalyst section 781 of the catalyst unit 78.

From a view in Vehicle-Front-Back Direction FB, the dimension in Vehicle-Left-Right Direction LR of the air cleaner 40 is smaller than the dimension in Vehicle-Left-Right Direction LR of the turbocharger 80. Additionally, from a view in Vehicle-Front-Back Direction FB, the dimension in Vehicle-Left-Right Direction LR of the air cleaner 40 is greater than the distance in Vehicle-Left-Right Direction LR between the free end of the turbine wheel 81 and the free end of the compressor wheel 82 of the turbocharger 80. The free end of the turbine wheel 81 and the free end of the compressor wheel 82 mean the respective ends of the turbine wheel 81 and the compressor wheel 82 that are opposite to their respective ends connected to the connecting shaft 83.

Next, with reference to FIG. 1, the position of the air cleaner 40 will be described in more detail.

From a view in Vehicle-Front-Back Direction FB, at least part of the air cleaner 40 covers or is covered by the left leg of the rider RD who is sitting on the seat 16 and has his or her left and right feet placed on the pair of left and right footrests 17. From a view in Vehicle-Left-Right Direction LR, the air cleaner 40 is positioned entirely more frontward than the left and right leg of the rider RD who is sitting on the seat 16 and has his or her left and right feet placed on the pair of left and right footrests 17.

In the straddled vehicle 10, the air cleaner 40 is positioned entirely more leftward or more rightward than the catalyst unit 78 and the turbocharger 80. Thus, the air cleaner 40 does not exist in a place to which the air heated by the heat emitted from the catalyst unit 78 and the turbocharger 80 flows. (The air heated by the heat emitted from the catalyst unit 78 and the turbocharger 80 flows in vehicle-upward direction U.) In other words, from a view in Vehicle-Front-Back Direction FB, the air cleaner 40 is positioned neither over the catalyst 78 nor over the turbocharger 80. Therefore, when the straddled vehicle 10 is idling, the air cleaner 40 is unlikely to suck in the air heated by the heat emitted from the turbocharger 80 and the catalyst unit 78.

In the straddled vehicle 10, from a view in Vehicle-Front-Back Direction FB, at least part of the air cleaner 40 covers or is covered by the left leg of the rider RD who is sitting on the seat 16 and putting his/her left and right feet on the pair of left and right footrests 17. This arrangement keeps the straddled vehicle 10 from increasing in the dimension in Vehicle-Left-Right Direction LR.

In the straddled vehicle 10, from a view in Vehicle-Left-Right Direction LR, the catalyst unit 78 and the turbocharger 80 are arranged in line in Vehicle Up-Down Direction UD. This arrangement keeps the straddled vehicle 10 from increasing in the dimension in Vehicle-Front-Back Direction FB.

In the straddled vehicle 10, the lower end of the air cleaner 40 is positioned more downward than the upper end of the turbocharger 40. This arrangement keeps the straddled vehicle 10 from increasing in the dimension in Vehicle-Up-Down Direction UD.

In the straddled vehicle 10, the air cleaner 40 has a smaller dimension in Vehicle-Left-Right Direction LR than in Vehicle-Up-Down Direction UD. This shape of the air cleaner 40 keeps the straddled vehicle 10 from increasing in the dimension in Vehicle Left-Right Direction LR.

In the straddled vehicle 10, the upper end of the air cleaner 40 is positioned more downward than the center 1411 of the head pipe 141 with respect to the axial direction of the head pipe 141. This arrangement keeps the straddled vehicle 10 from increasing in the dimension in Vehicle-Up-Down Direction UD.

### (Modification 1)

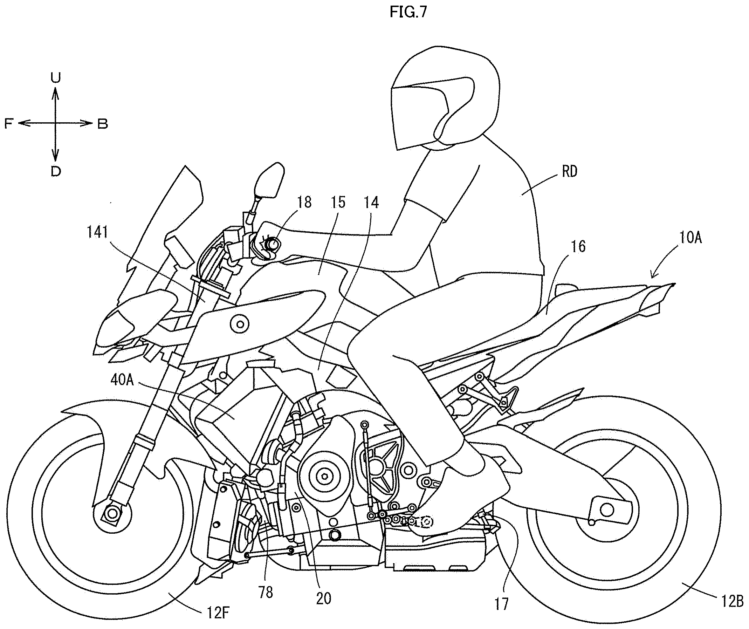

With reference to FIG. 7, a straddled vehicle 10A according to Modification 1 of the embodiment of the present teaching will be described. FIG. 7 is a left side view of the straddled vehicle 10A.

The straddled vehicle 10A is different from the straddled vehicle 10 in that an air cleaner 40Ais used instead of the air cleaner 40. From a view in Vehicle-Left-Right Direction LR, the air cleaner 40A overlaps or is overlapped by the turbocharger 80. The dimension in Vehicle-Front-Back Direction FB of the air cleaner 40A is smaller than the dimension in Vehicle-Front-Back Direction FB of the air cleaner 40.

The straddled vehicle 10A has the same advantageous effects as the straddled vehicle 10 does.

### (Modification 2)

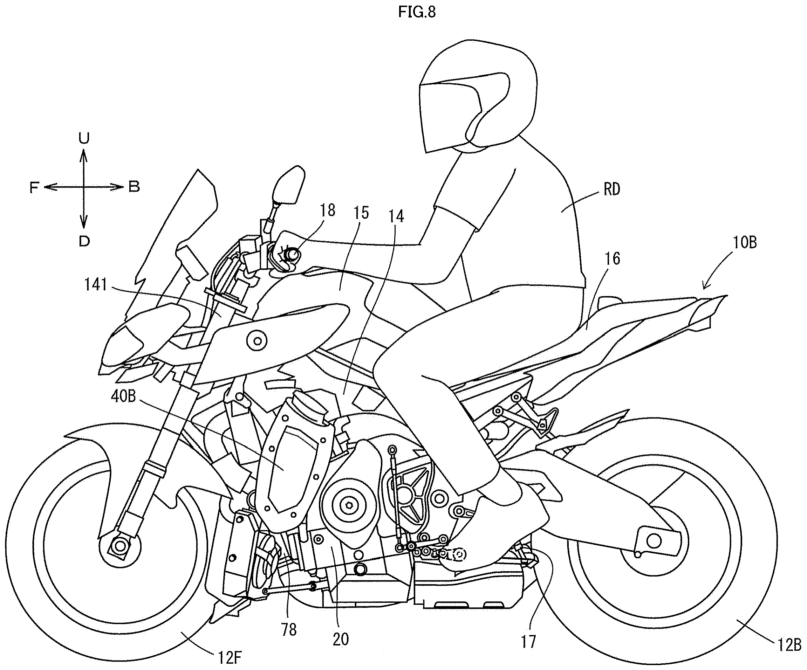

With reference to FIG. 8, a straddled vehicle 10B according to Modification 2 of the embodiment of the present teaching will be described. FIG. 8 is a left side view of the straddled vehicle 10B.

The straddled vehicle 10B is different from the straddled vehicle 10 in that an air cleaner 40B is used instead of the air cleaner 40. From a view in Vehicle-Left-Right Direction LR, the air cleaner 40B overlaps or is overlapped by the turbocharger 80. The air cleaner 40B is different from the air cleaner 40 in that the air cleaner 40B has a smaller dimension in Vehicle-Front-Back Direction FB than in Vehicle-Front-Back Direction UD.

The straddled vehicle 10B has the same advantageous effects as the straddled vehicle 10 does.

### (Other Embodiments)

The embodiments and modifications described herein and/or illustrated by the drawings are to make the present teaching easier to understand and not to limit the concept of the present teaching. It is possible to adapt or alter the embodiments and modifications described above within the scope defined by the appended claims.

The gist includes all equivalent elements, modifications, omissions, combinations (for example, combinations of features of the embodiments and modifications), adaptations and alterations as would be appreciated by those in the art based on the embodiments and modifications disclosed herein. The limitations in the claims are to be interpreted broadly based on the language employed in the claims and not limited to the embodiments described in the present specification or during the prosecution of the present application. Such embodiments and modifications are to be understood as non-exclusive. For example, the terms "preferable" and "good" in the present specification are to be understood as non-exclusive, and these terms mean "preferable but not limited to this" and "good but not limited to this", respectively.

The straddled vehicle described in the embodiment above has an engine with three combustion chambers. However, the number of combustion chambers in the engine may be one, two, or four or more.

In the embodiment above, an injector is attached to each cylinder head. However, an injector may be positioned, for example, in the outer intake passageway.

In the embodiment above, an injector is used as a fuel supply device. However, a carburetor may be used instead of the injector.

In the embodiment above, a bypath intake passageway may be formed in such a manner so as to circle around the compressor wheel and to be connected to the outer intake passageway 34. In this case, a blowoff valve is positioned in the bypath intake passageway. The blowoff valve is to adjust the amount of air supplied to the engine 20. The blowoff valve is, for example, an electromagnetic valve.

In the embodiment above, a waste gate valve may be provided.

### Reference Sign List

10: straddled vehicle
14: vehicle body frame
141: head pipe
16: seat
17: footrest
20: engine
30: intake passageway
30A: intake passage
32: inner intake passageway
32A: inner intake passage
34: outer intake passageway
34A: outer intake passage
40: air cleaner
70: exhaust passageway
72: inner exhaust passageway
72A: inner exhaust passage
74: outer exhaust passageway
74A: outer exhaust passage
78: catalyst unit
781: main catalyst section
80: turbocharger
81: turbine wheel
82: compressor wheel

## Claims

1. A straddled vehicle (10) comprising:
an engine (20);
an intake passageway (30) defining an intake passage through which intake air taken in from the atmosphere may flow to the engine (20);
an exhaust passageway (70) defining an exhaust passage through which an exhaust gas from the engine (20) may flow;
a turbocharger (80) including:
a turbine wheel (81) positioned in the exhaust passageway (70); and
a compressor wheel (82) positioned in the intake passageway (30) and connected to the turbine wheel (81) in such a manner so as to rotate together with the turbine wheel (81);
a seat (16) that is to be sat on by a rider of the straddled vehicle (10), the seat (16) being positioned entirely more rearward than the turbocharger (80) from a view in a leftward-rightward direction (LR) of the straddled vehicle (10);
a pair of left and right footrests (17) that is to support the left and right feet of a rider when the rider is sitting on the seat (16), the pair of left and right footrests (17) being positioned entirely more rearward and more downward than the turbocharger (80) from a view in the leftward-rightward direction (LR) of the straddled vehicle (10);
a catalyst unit (78) that is placed in the exhaust passageway (70) to clean the exhaust gas, the catalyst unit (78) being positioned: downstream from the turbine wheel (81) with respect to the direction of exhaust gas flow in the exhaust passageway (70); and entirely more leftward or rightward than the turbocharger (80) from a view in a frontward-backward direction (FB) of the straddled vehicle (10); and
an air cleaner (40) that is placed in the intake passageway (30) to clean the intake air, the air cleaner (40) being positioned in such a manner that:
the air cleaner (40) includes a part that is positioned more upward than the catalyst unit (78), a rotation axis (CL) of the turbine wheel (81) and a rotation axis (CL) of the compressor wheel (82);
from a view in the leftward-rightward direction (LR) of the straddled vehicle (10), the air cleaner (40) is positioned in line with at least one of the catalyst unit (78) or the turbocharger (80) in an upward-downward direction (UD) of the straddled vehicle (10);
the air cleaner (40) is positioned entirely more leftward or rightward than the catalyst unit (78) and the turbocharger (80);
when a rider is sitting on the seat (16) and has his or her left and right feet placed on the pair of left and right footrests (17), the air cleaner (40) is positioned entirely more frontward than the left and right leg of the rider; and
when a rider is sitting on the seat (16) and has his or her left and right feet placed on the pair of left and right footrests (17), from a view in the frontward-backward direction (FB) of the straddled vehicle (10), at least part of the air cleaner (40) covers or is covered by the left or right leg of the rider, wherein:
the air cleaner (40) includes: an air filter (44) that is configured to clean the intake air; and an air cleaner housing (42) that defines an air filter encasing space (420) in which the air filter (44) is encased; and
an outlet (422) formed in the air cleaner housing (42) is connected to the turbocharger (80) and faces vehicle-downward (D),
from a view in the leftward-rightward direction (LR) of the straddled vehicle (10), the outlet (422) of the air cleaner (40) is positioned entirely more upward than the rotation axis (CL) of the turbine wheel (81) and the compressor wheel (82) of the turbocharger (80).

2. The straddled vehicle (10) according to claim 1, wherein:
the air cleaner (40) is positioned in line with the catalyst unit (78) and the turbocharger (80) in the upward-downward direction (UD) of the straddled vehicle (10), from a view in the leftward-rightward direction (LR) of the straddled vehicle (10).

3. The straddled vehicle (10) according to claim 1 or 2, wherein:
the air cleaner (40) is positioned in such a manner that:
from a view in the leftward-rightward direction (LR) of the straddled vehicle (10), the air cleaner (40) is positioned in line with at least one of the catalyst unit (78), the turbine wheel (81) of the turbocharger (80) or the compressor wheel (82) of the turbocharger (80) in the upward-downward direction (UD) of the straddled vehicle (10);
the air cleaner (40) is positioned entirely more leftward or rightward than the catalyst unit (78), the turbine wheel (81) of the turbocharger (80) and the compressor wheel (82) of the turbocharger (80); and
when a rider is sitting on the seat (16) and has his or her feet placed on the pair of left and right footrests (17), the air cleaner (40) is positioned entirely more frontward than the left and right leg of the rider; and
when a rider is sitting on the seat (16) and has his or her feet placed on the pair of left and right footrests (17), from a view in the frontward-backward direction (FB) of the straddled vehicle (10), at least part of the air cleaner (40) covers or is covered by the left or right leg of the rider.

4. The straddled vehicle (10) according to claim 3, wherein:
the air cleaner housing (42) is positioned in such a manner that:
the air cleaner housing (42) includes a part that is positioned more upward than the catalyst unit (78), the rotation axis (CL) of the turbine wheel (81) and the rotation axis (CL) of the compressor wheel (82);
from a view in the leftward-rightward direction (LR) of the straddled vehicle (10), the air cleaner housing (42) is positioned in line with at least one of the catalyst unit (78), the turbine wheel (81) of the turbocharger (80) or the compressor wheel (82) of the turbocharger (80) in the upward-downward direction (UD) of the straddled vehicle (10);
the air cleaner housing (42) is positioned entirely more leftward or rightward than the catalyst unit (78), the turbine wheel (81) and the compressor wheel (82) of the turbocharger (80); and
when a rider is sitting on the seat (16) and has his or her feet placed on the pair of left and right footrests (17), the air cleaner housing (42) is positioned entirely more frontward than the left and right leg of the rider; and
when a rider is sitting on the seat (16) and has his or her feet placed on the pair of left and right footrests (17), from a view in the frontward-backward direction (FB) of the straddled vehicle (10), at least part of the air cleaner housing (42) covers or is covered by the left or right leg of the rider.

5. The straddled vehicle (10) according to any one of claims 1 to 4, wherein
from a view in the frontward-backward direction (FB) of the straddled vehicle (10), each of the catalyst unit (78), the turbine wheel (81) of the turbocharger (80) and the compressor wheel (82) of the turbocharger (80) includes a part that covers or is covered by the engine (20).

6. The straddled vehicle (10) according to any one of claims 1 to 5, wherein
the air cleaner (40) has a smaller dimension in the leftward-rightward direction (LR) of the straddled vehicle (10) than in the upward-downward direction (UD) of the straddled vehicle (10).

## Patentansprüche

1. Ein Spreizsitzfahrzeug (10), das folgende Merkmale aufweist:
einen Motor (20);
einen Einlassdurchgang (30), der einen Einlassdurchlass definiert, durch den aus der Umgebung aufgenommene Einlassluft zu dem Motor (20) strömen kann;
einen Ablassdurchgang (70), der einen Ablassdurchlass definiert, durch den ein Abgas aus dem Motor (20) strömen kann;
einen Turbolader (80), der folgende Merkmale umfasst:
ein Turbinenrad (81), das in dem Ablassdurchgang (70) angeordnet ist; und
ein Verdichterrad (82), das in dem Einlassdurchgang (30) angeordnet ist und mit dem Turbinenrad (81) derart verbunden ist, dass es sich zusammen mit dem Turbinenrad (81) dreht;
einen Sitz (16), der zum Aufsitzen durch einen Fahrer des Spreizsitzfahrzeugs (10) dient, wobei der Sitz (16) aus einer Sicht in einer Links-Rechts-Richtung (LR) des Spreizsitzfahrzeugs (10) gänzlich weiter hinten als der Turbolader (80) angeordnet ist;
ein Paar aus linker und rechter Fußstütze (17) zum Stützen des linken und rechten Fußes eines Fahrers, wenn der Fahrer auf dem Sitz (16) sitzt, wobei das Paar aus linker und rechter Fußstütze (17) aus einer Sicht in einer Links-Rechts-Richtung (LR) des Spreizsitzfahrzeugs (10) gänzlich weiter hinten und weiter unten als der Turbolader (80) angeordnet ist;
eine Katalysatoreinheit (78), die in dem Auslassdurchgang (70) platziert ist, um das Abgas zu reinigen, wobei die Katalysatoreinheit (78) folgendermaßen angeordnet ist: bezüglich der Richtung des Abgasstroms in dem Ablassdurchgang (70) dem Turbinenrad (81) nachgelagert; und gänzlich weiter links oder rechts als der Turbolader (80) aus einer Sicht in einer Vorne-Hinten-Richtung (FB) des Spreizsitzfahrzeugs (10); und
einen Luftreiniger (40), der in dem Einlassdurchgang (30) platziert ist, um die Einlassluft zu reinigen, wobei der Luftreiniger (40) derart angeordnet ist, dass:
der Luftreiniger (40) einen Teil umfasst, der weiter oben als die Katalysatoreinheit (78), eine Drehachse (CL) des Turbinenrads (81) und eine Drehachse (CL) des Verdichterrads (82) angeordnet ist;
aus einer Sicht in einer Links-Rechts-Richtung (LR) des Spreizsitzfahrzeugs (10) der Luftreiniger (40) auf einer Linie mit zumindest einem der Katalysatoreinheit (78) oder des Turboladers (80) in einer Aufwärts-Abwärts-Richtung (UD) des Spreizsitzfahrzeugs (10) angeordnet ist;
der Luftreiniger (40) gänzlich weiter links oder rechts als die Katalysatoreinheit (78) und der Turbolader (80) angeordnet ist;
wenn ein Fahrer auf dem Sitz (16) sitzt und seinen oder ihren linken und rechten Fuß auf dem Paar aus linker und rechter Fußstütze (17) platziert hat, der Luftreiniger (40) gänzlich weiter vorne als das linke und rechte Bein des Fahrers angeordnet ist; und
wenn ein Fahrer auf dem Sitz (16) sitzt und seinen oder ihren linken und rechten Fuß auf dem Paar aus linker und rechter Fußstütze (17) platziert hat, aus einer Sicht in der Vorne-Hinten-Richtung (FB) des Spreizsitzfahrzeugs (10), zumindest ein Teil des Luftreinigers (40) das linke oder rechte Bein des Fahrers abdeckt oder davon abgedeckt ist, wobei:
der Luftreiniger (40) folgende Merkmale umfasst: einen Luftfilter (44), der dafür ausgebildet ist, die Einlassluft zu reinigen; und ein Luftreinigergehäuse (42), das einen Luftfilter-umschließenden Raum (420) definiert, in dem der Luftfilter (44) umschlossen ist; und
ein in dem Luftreinigergehäuse (42) gebildeter Auslass (422) mit dem Turbolader (80) verbunden ist und zur Fahrzeugunterseite (D) gewandt ist,
aus einer Sicht in einer Links-Rechts-Richtung (LR) des Spreizsitzfahrzeugs (10) der Auslass (422) des Luftreinigers (40) gänzlich weiter oben als die Drehachse (CL) des Turbinenrads (81) und des Verdichterrads (82) des Turboladers (80) angeordnet ist.

2. Das Spreizsitzfahrzeug (10) gemäß Anspruch 1, bei dem:
der Luftreiniger (40) auf einer Linie mit der Katalysatoreinheit (78) und dem Turbolader (80) in der Aufwärts-Abwärts-Richtung (UD) des Spreizsitzfahrzeugs (10) aus einer Sicht in der Links-Rechts-Richtung (LR) des Spreizsitzfahrzeugs (10) angeordnet ist.

3. Das Spreizsitzfahrzeug (10) gemäß Anspruch 1 oder, bei dem:
der Luftreiniger (40) derart angeordnet ist, dass:
aus einer Sicht in der Links-Rechts-Richtung (LR) des Spreizsitzfahrzeugs (10) der Luftreiniger (40) auf einer Linie mit zumindest einem der Katalysatoreinheit (78), des Turbinenrads (81) des Turboladers (80) oder des Verdichterrads (82) des Turboladers (80) in der Aufwärts-Abwärts-Richtung (UD) des Spreizsitzfahrzeugs (10) angeordnet ist;
der Luftreiniger (40) gänzlich weiter links oder rechts als die Katalysatoreinheit (78), das Turbinenrad (81) des Turboladers (80) und das Verdichterrad (82) des Turboladers (80) angeordnet ist; und
wenn ein Fahrer auf dem Sitz (16) sitzt und seine oder ihre Füße auf dem Paar aus linker und rechter Fußstütze (17) platziert hat, der Luftreiniger (40) gänzlich weiter vorne als das linke und rechte Bein des Fahrers angeordnet ist; und
wenn ein Fahrer auf dem Sitz (16) sitzt und seine oder ihre Füße auf dem Paar aus linker und rechter Fußstütze (17) platziert hat, aus einer Sicht in der Vorne-Hinten-Richtung (FB) des Spreizsitzfahrzeugs (10), zumindest ein Teil des Luftreinigers (40) das linke oder rechte Bein des Fahrers abdeckt oder davon abgedeckt ist.

4. Das Spreizsitzfahrzeug (10) gemäß Anspruch 3, bei dem:
das Luftreinigergehäuse (42) derart angeordnet ist, dass:
das Luftreinigergehäuse (42) einen Teil umfasst, der weiter oben als die Katalysatoreinheit (78), die Drehachse (CL) des Turbinenrads (81) und die Drehachse (CL) des Verdichterrads (82) angeordnet ist;
aus einer Sicht in der Links-Rechts-Richtung (LR) des Spreizsitzfahrzeugs (10) das Luftreinigergehäuse (42) auf einer Linie mit zumindest einem der Katalysatoreinheit (78), des Turbinenrads (81) des Turboladers (80) oder des Verdichterrads (82) des Turboladers (80) in der Aufwärts-Abwärts-Richtung (UD) des Spreizsitzfahrzeugs (10) angeordnet ist;
das Luftreinigergehäuse (42) gänzlich weiter links oder rechts als die Katalysatoreinheit (78), das Turbinenrad (81) des Turboladers (80) und das Verdichterrad (82) des Turboladers (80) angeordnet ist; und
wenn ein Fahrer auf dem Sitz (16) sitzt und seine oder ihre Füße auf dem Paar aus linker und rechter Fußstütze (17) platziert hat, das Luftreinigergehäuse (42) gänzlich weiter vorne als das linke und rechte Bein des Fahrers angeordnet ist; und
wenn ein Fahrer auf dem Sitz (16) sitzt und seine oder ihre Füße auf dem Paar aus linker und rechter Fußstütze (17) platziert hat, aus einer Sicht in der Vorne-Hinten-Richtung (FB) des Spreizsitzfahrzeugs (10), zumindest ein Teil des Luftreinigergehäuses (42) das linke oder rechte Bein des Fahrers abdeckt oder davon abgedeckt ist.

5. Das Spreizsitzfahrzeug (10) gemäß einem der Ansprüche 1 bis 4, bei dem
aus einer Sicht in der Vorne-Hinten-Richtung (FB) des Spreizsitzfahrzeugs (10) die Katalysatoreinheit (78), das Turbinenrad (81) des Turboladers (80) und das Verdichterrad (82) des Turboladers (80) jeweils einen Teil umfassen, der den Motor (20) abdeckt oder davon abgedeckt ist.

6. Das Spreizsitzfahrzeug (10) gemäß einem der Ansprüche 1 bis 5, bei dem
der Luftreiniger (40) in der Links-Rechts-Richtung des Spreizsitzfahrzeugs (10) eine kleinere Abmessung aufweist als in der Aufwärts-Abwärts-Richtung (UD) des Spreizsitzfahrzeugs (10).

## Revendications

1. Véhicule à selle (10) comprenant:
un moteur (20);
un passage d'admission (30) définissant un passage d'admission à travers lequel l'air d'admission prélevé de l'atmosphère peut circuler vers le moteur (20);
un passage d'échappement (70) définissant un passage d'échappement à travers lequel peut circuler un gaz d'échappement provenant du moteur (20);
un turbocompresseur (80) comportant:
une roue de turbine (81) positionnée dans le passage d'échappement (70); et
une roue de compresseur (82) positionnée dans le passage d'admission (30) et connectée à la roue de turbine (81) de manière à tourner ensemble avec la roue de turbine (81);
un siège (16) sur lequel doit s'asseoir un conducteur du véhicule à selle (10), le siège (16) étant positionné entièrement plus en arrière que le turbocompresseur (80) lorsque vu dans une direction gauche-droite (LR) du véhicule à selle (10);
une paire de repose-pieds gauche et droit (17) destinés à supporter les pieds gauche et droit d'un conducteur lorsque le conducteur est assis sur le siège (16), la paire de repose-pieds gauche et droit (17) étant positionnés entièrement plus en arrière et plus vers le bas que le turbocompresseur (80) lorsque vu dans la direction gauche-droite (LR) du véhicule à selle (10);
une unité de catalyseur (78) qui est placée dans le passage d'échappement (70) pour purifier le gaz d'échappement, l'unité de catalyseur (78) étant positionnée: en aval de la roue de turbine (81) par rapport à la direction de circulation du gaz d'échappement dans le passage d'échappement (70); et entièrement plus à gauche ou à droite que le turbocompresseur (80) lorsque vu dans une direction avant-arrière (FB) du véhicule à selle (10); et
un purificateur d'air (40) qui est placé dans le passage d'admission (30) pour purifier l'air d'admission, le purificateur d'air (40) étant positionné de telle manière que:
le purificateur d'air (40) comporte une partie qui est positionnée plus vers le haut que l'unité de catalyseur (78), un axe de rotation (CL) de la roue de turbine (81) et un axe de rotation (CL) de la roue de compresseur (82);
lorsque vu dans la direction gauche-droite (LR) du véhicule à selle (10), le purificateur d'air (40) est positionné en ligne avec au moins l'un parmi l'unité de catalyseur (78) ou le turbocompresseur (80) dans une direction vers le haut-direction vers le bas (UD) du véhicule à selle (10);
le purificateur d'air (40) est positionné entièrement plus à gauche ou à droite que l'unité de catalyseur (78) et le turbocompresseur (80);
lorsqu'un conducteur est assis sur le siège (16) et a ses pieds gauche et droit placés sur la paire de repose-pieds gauche et droit (17), le purificateur d'air (40) est positionné entièrement plus vers l'avant que les jambes gauche et droite du conducteur; et
lorsqu'un conducteur est assis sur le siège (16) et a ses pieds gauche et droit placés sur la paire de repose-pieds gauche et droit (17), lorsque vu dans la direction avant-arrière (FB) du véhicule à selle (10), au moins une partie du purificateur d'air (40) recouvre ou est recouverte par la jambe gauche ou droite du conducteur,
dans lequel:
le purificateur d'air (40) comporte: un purificateur d'air (44) qui est configuré pour purifier l'air d'admission; et un boîtier de purificateur d'air (42) qui définit un espace de logement de purificateur d'air (420) dans lequel est logé le purificateur d'air (44); et
une sortie (422) formée dans le boîtier de purificateur d'air (42) est connectée au turbocompresseur (80) et fait face au véhicule vers le bas (D),
lorsque vue dans la direction gauche-droite (LR) du véhicule à selle (10), la sortie (422) du purificateur d'air (40) est positionnée entièrement plus vers le haut que l'axe de rotation (CL) de la roue de turbine (81) et la roue de compresseur (82) du turbocompresseur (80).

2. Véhicule à selle (10) selon la revendication 1, dans lequel:
le purificateur d'air (40) est positionné en ligne avec l'unité de catalyseur (78) et le turbocompresseur (80) dans la direction de haut en bas (UD) du véhicule à selle (10), lorsque vu dans la direction gauche-droite (LR) du véhicule à selle (10).

3. Véhicule à selle (10) selon la revendication 1 ou 2, dans lequel:
le purificateur d'air (40) est positionné de telle manière que:
lorsque vu dans la direction gauche-droite (LR) du véhicule à selle (10), le purificateur d'air (40) est positionné en ligne avec au moins l'une parmi l'unité de catalyseur (78), la roue de turbine (81) du turbocompresseur (80) ou la roue de compresseur (82) du turbocompresseur (80) dans la direction de haut en bas (UD) du véhicule à selle (10);
le purificateur d'air (40) est positionné entièrement plus à gauche ou à droite que l'unité de catalyseur (78), la roue de turbine (81) du turbocompresseur (80) et la roue de compresseur (82) du turbocompresseur (80); et
lorsqu'un conducteur est assis sur le siège (16) et a ses pieds placés sur la paire de repose-pieds gauche et droit (17), le purificateur d'air (40) est positionné entièrement plus vers l'avant que les jambes gauche et droite du conducteur; et
lorsqu'un conducteur est assis sur le siège (16) et à ses pieds posés sur la paire de repose-pieds gauche et droit (17), lorsque vu dans la direction avant-arrière (FB) du véhicule à selle (10), au moins une partie du purificateur d'air (40) recouvre ou est recouverte par la jambe gauche ou droite du conducteur.

4. Véhicule à selle (10) selon la revendication 3, dans lequel:
le boîtier de purificateur d'air (42) est positionné de telle manière que:
le boîtier de purificateur d'air (42) comporte une partie qui est positionnée plus vers le haut que l'unité de catalyseur (78), l'axe de rotation (CL) de la roue de turbine (81) et l'axe de rotation (CL) de la roue de compresseur (82);
lorsque vu dans la direction gauche-droite (LR) du véhicule à selle (10), le boîtier de purificateur d'air (42) est positionné en ligne avec au moins l'une parmi l'unité de catalyseur (78), la roue de turbine (81) du turbocompresseur (80) ou la roue de compresseur (82) du turbocompresseur (80) dans la direction de haut en bas (UD) du véhicule à selle (10);
le boîtier de purificateur d'air (42) est positionné entièrement plus à gauche ou à droite que l'unité de catalyseur (78), la roue de turbine (81) et la roue de compresseur (82) du turbocompresseur (80); et
lorsqu'un conducteur est assis sur le siège (16) et a ses pieds placés sur la paire de repose-pieds gauche et droit (17), le boîtier de purificateur d'air (42) est positionné entièrement plus vers l'avant que les jambes gauche et droite du conducteur; et
lorsqu'un conducteur est assis sur le siège (16) et a ses pieds placés sur la paire de repose-pieds gauche et droit (17), lorsque vu dans la direction avant-arrière (FB) du véhicule à selle (10), au moins une partie du boîtier de purificateur d'air (42) recouvre ou est recouverte par la jambe gauche ou droite du conducteur.

5. Véhicule à selle (10) selon l'une quelconque des revendications 1 à 4, dans lequel
lorsque vu dans la direction avant-arrière (FB) du véhicule à selle (10), chacune parmi l'unité de catalyseur (78), la roue de turbine (81) du turbocompresseur (80) et la roue de compresseur (82) du turbocompresseur (80) comporte une partie qui recouvre ou est recouverte par le moteur (20).

6. Véhicule à selle (10) selon l'une quelconque des revendications 1 à 5, dans lequel
le purificateur d'air (40) présente une dimension plus petite dans la direction gauche-droite (LR) du véhicule à selle (10) que dans la direction de haut en bas (UD) du véhicule à selle (10).
